# EUROPEAN PATENT APPLICATION

(11) **EP 3 280 103 A1**
(43) Date of publication of application: **07.02.2018**
(21) Application number: 16773073.8
(22) Date of filing: 30.03.2016
(51) Int. Cl.: H04L 12/717, H04L 12/70

(54) **CONTROL DEVICE, CONTROL METHOD, AND PROGRAM**

(30) Priority: 31.03.2015 JP 2015073888
(71) Applicant: NEC Corporation, Tokyo 108-8001 (JP)
(72) Inventor: KUBOTA, Kazushi, Tokyo 108-8001 (JP); TAKASHIMA, Masanori, Tokyo 108-8001 (JP); TANABE, Yosuke, Tokyo 108-8001 (JP); KASE, Tomohiro, Tokyo 108-8001 (JP)
(74) Representative: Robson, Aidan John
(86) International application number: PCT/JP2016/060577
(87) International publication number: WO 2016/159192

(57) **Abstract**

A controller that implements a service on a virtual network, on a physical NW, a method for rendering the service, and a program, are presented. The controller, comprises: first means for identifying a communication node(s) corresponding to a service(s) requested by a user(s); second means for identifying information regarding a position of the identified communication node(s) in a physical network; and third means for setting a data path implementing the service(s) on the physical network based on the information regarding the position.

## Description

### [TECHNICAL FIELD]

### (Reference to Related Application)

This application is based upon and claims the benefit of the priority of Japanese Patent Application No. 2015-073888 filed on March 31, 2015, the disclosure of which is incorporated herein in its entirety by reference thereto.

This invention relates to a controller, a control method and a program. More particularly, it relates to a controller, a control method and a program each of which exploits resources of a physical network to render a diversity of services.

### [BACKGROUND]

Patent Literature 1 discloses a method for management of a network virtualization system. In its paragraphs 48 ff., it is stated that a network virtualization system 1 receives an instruction from a setting terminal 31 and, using resources of physical nodes (physical node 21 through physical node 26) and physical links 51, constructs virtual networks (virtual networks 2, 3) each including a virtual node and a virtual network (see for example paragraphs 131 to 141).

### [CITATION LIST]

### [PATENT LITERATURE]

PTL1: JP Patent Kohyo Publication No. JP2014-501458A

### [SUMMARY]

### [TECHNICAL PROBLEM]

The following analysis is given by the present invention. To render a service for a user, including booting a virtual machine (VM) in a network for use from outside, with the aid of a network virtualization technique, exemplified by Patent Literature 1, for example, it is necessary to make provision for physical resources necessary in implementing such service and perform the setting required without incongruences. See for example Fig. 16 and Fig. 13 of Patent Literature 1.

However, there is not made in Patent Literature 1 a disclosure of how to implement the service on a virtual network, as requested to be presented by a user, in particular, a disclosure of how to arrange or connect the physical resources required in presenting the service, in case a request for a service is made from the user.

It is an object of the present invention to provide a controller, a control method and a program to implement a service on a virtual network on a physical network (NW).

### [SOLUTION TO PROBLEM]

In a first aspect, there is provided a controller comprising: first means for identifying a communication node(s) corresponding to a service(s) requested by a user(s); second means for identifying information regarding a position of the identified communication node(s) in a physical network; and third means for setting a data path implementing the service(s) on the physical network based on the information regarding the position.

In a second aspect, there is provided a communication system, comprising: a controller controlling a physical network; and a plurality of communication nodes supervised by the controller. The controller comprises: first means for identifying a communication node(s), among the plurality of communication nodes, corresponding to a service(s) requested by a user(s); second means for identifying information regarding a position of the identified communication node(s) in a physical network; and third means for setting a data path implementing the service(s) on the physical network based on the information regarding the position.

In a third aspect, there is provided a control method, comprising:
identifying a communication node(s) corresponding to a service(s) requested by a user(s); identifying information regarding a position of the identified communication node(s) in a physical network; and setting a data path implementing the service(s) on the physical network based on the information regarding the position. The present method is tied up with a particular machine which is the controller including the above stated first to third means.

In a fourth aspect, there is provided a program that causes a computer to execute: identifying a communication node(s) corresponding to a service(s) requested by a user(s); identifying information regarding a position of the identified communication node(s) in a physical network; and setting a data path implementing the service(s) on the physical network based on the information regarding the position. This program can be recorded on a computer-readable (non-transient) recording medium. That is, the present invention can be implemented as a computer program product.

### [ADVANTAGEOUS EFFECTS OF INVENTION]

With the controller, control method and the program according to the present invention, it is possible to implement a service on a virtual network on a physical network.

### [BRIEF DESCRIPTION OF DRAWINGS]

[FIG. 1] Fig. 1 is a schematic view showing an example configuration of a system according to an example embodiment 1 of the present invention.
[FIG. 2] Fig. 2 is a block diagram showing an example configuration of a controller according to the example embodiment 1 of the present invention.
[FIG. 3] Fig. 3 is a block diagram showing example processing executed by a control unit of the example embodiment 1 of the present invention.
[FIG. 4] Fig. 4 is a tabulated view showing an example table held by the controller of the example embodiment 1 of the present invention.
[FIG. 5] Fig. 5 is a flowchart showing an example operation of the controller of the example embodiment 1 of the present invention.
[FIG. 6] Fig. 6 is a schematic view showing another example configuration of the system of the example embodiment 1 of the present invention.
[FIG. 7] Fig. 7 is a schematic view showing an example configuration of a system of an example embodiment 2 of the present invention.
[FIG. 8] Fig. 8 is a tabulated view showing an example table held by a controller of an example embodiment 2 of the present invention.
[FIG. 9] Fig. 9 is a flowchart showing an example operation of the controller of the example embodiment 2 of the present invention.
[FIG. 10] Fig. 10 is a schematic view showing another example configuration of the controller of the example embodiment 2 of the present invention.
[FIG. 11] Fig. 11 is a schematic view showing a configuration of a controller according to an example embodiment 3 of the present invention.
[FIG. 12] Fig. 12 is a schematic view showing an example configuration of a system of the example embodiment 3 of the present invention.
[FIG. 13] Fig. 13 is a flowchart showing an example operation of a controller of the example embodiment 3 of the present invention.
[FIG. 14] Fig. 14 is a schematic view showing an example configuration of a system of an example embodiment 4 of the present invention.
[FIG. 15] Fig. 15 is a tabulated view showing another example table held by a controller of the example embodiment 4 of the present invention.
[FIG. 16] Fig. 16 is a schematic view showing another example configuration of the system of the example embodiment 4 of the present invention.
[FIG. 17] Fig. 17 is a block diagram showing an example configuration of a system of an example embodiment 5 of the present invention.
[FIG. 18] Fig. 18 is a block diagram showing an example configuration of a controller of the example embodiment 5 of the present invention.
[FIG. 19] Fig. 19 is a block diagram showing a physical node run in concert with the controller of the example embodiment 5 of the present invention.
[FIG. 20] Fig. 20 is a schematic view showing an example configuration of a VNF by a physical node run in concert with the controller of the example embodiment 5.
[FIG. 21] Fig. 21 is a block diagram showing an example configuration of a system of the example embodiment 5 of the present invention.
[FIG. 22] Fig. 22 is a flowchart showing an example operation of the controller of the example embodiment 5 of the present invention.
[FIG. 23] Fig. 23 is a block diagram showing an example data path set in a physical node run in concert with the controller of the example embodiment 5 of the present invention.
[FIG. 24] Fig. 24 is a schematic view showing an example configuration of a system of an example embodiment 6 of the present invention.
[FIG. 25] Fig. 25 is a tabulated view showing another example table held by the controller of the example embodiment 6 of the present invention.
[FIG. 26] Fig. 26 is a flowchart showing an example operation of the controller of the example embodiment 6 of the present invention.
[FIG. 27] Fig. 27 is a schematic view showing an example configuration of a system of an example embodiment 7 of the present invention.
[FIG. 28] Fig. 28 is a tabulated view showing another example table held by the controller of the example embodiment 7 of the present invention.
[FIG. 29] Fig. 29 is a schematic view showing an example configuration of a system of an example embodiment 8 of the present invention.
[FIG. 30] Fig. 30 is a tabulated view showing an example table held by a controller of the example embodiment 8 of the present invention.
[FIG. 31] Fig. 31 is a schematic view showing another example configuration of the system of the example embodiment 8 of the present invention.
[FIG. 32] Fig. 32 is a schematic view showing another example configuration of the system of the example embodiment 8 of the present invention.

### [DESCRIPTION OF EMBODIMENTS]

### <Example Embodiment 1>

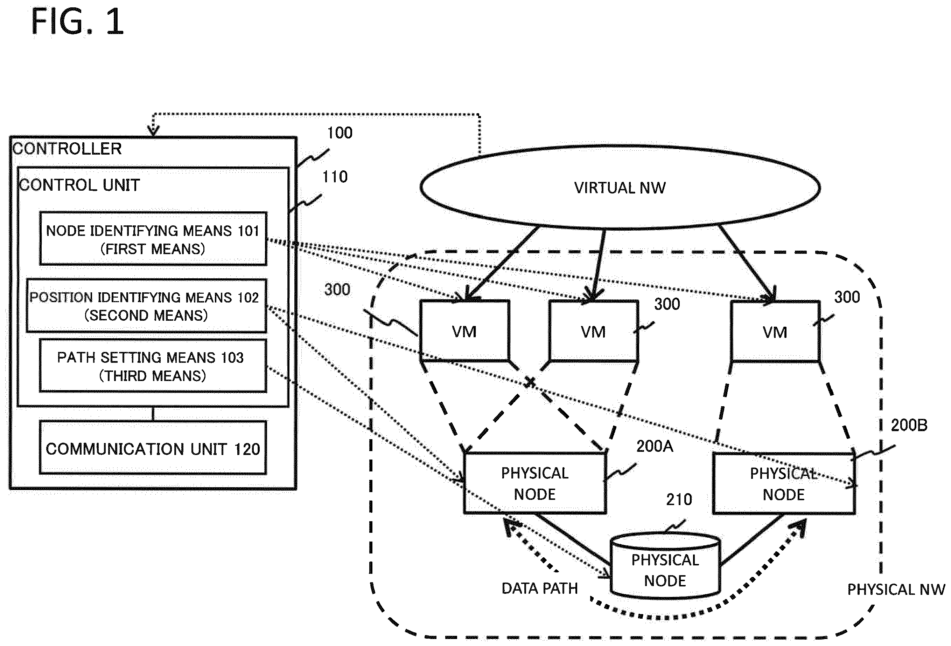

An example embodiment 1 according to the present invention will now be described in reference to the drawings. Fig. 1 shows an example configuration of a system of the example embodiment 1 according to the present invention. Fig. 1 shows an arrangement including a physical network (NW) and a controller 100, in which the physical NW includes physical nodes 200A, 200B and 210. In the following description, if there is no necessity to distinguish between the physical nodes 200A, 200B, they are referred to as physical nodes 200. The controller 100 is connected to the physical nodes 200, 210.

Among the physical nodes 200, 210, the physical nodes 200 are capable of providing virtual machines (VMs) 300 on a virtual network (virtual NW). A virtual machine environment constructing server, for example, may be cited as typical of the physical node 200. Although the VM 300 is run in the example embodiment of Fig. 1, a virtual appliance having on board an application program to allow for providing a specific function may also be used.

The physical node 210 implements communication between the physical nodes 200 in accordance with a route indicated by the controller 100. An OpenFlow switch or a layer-3 switch may be cited as typical of the physical node 210. A virtual switch, constructed by the physical node 200, may also be used in place of the physical node 210.

In case the virtual NW is run by a plurality of communication nodes, such as VMs 300, it is necessary to set a data path(s) between any two of the multiple communication nodes, such as VMs 300, in order to assure communication on the physical NW. Thus, in the example embodiment 1, a data path(s) is set between any two of the multiple communication nodes, such as VMs 300, included in the virtual NW.

On the other hand, in case the communication nodes, such as VMs 300, included in the virtual NW, are run by a plurality of respective distinct physical nodes 200, such as physical servers, and a data path(s) is to be set between the communication nodes, such as VMs 300, in the physical NW, it is necessary to set a data path(s) between the communication nodes 200 in the physical NW as well. For example, in the configuration of Fig. 1, each of the VMs 300 included in the virtual NW is run by the physical node 200A and the physical node 200B. If, in this configuration, the data path(s) is to be set between the VMs 300, it becomes necessary to set a data path between the physical nodes 200A, 200B as well. Thus, in the example embodiment 1, a data path(s) is also set between the multiple communication nodes 200, implementing a plurality of communication nodes, such as VMs 300, involved in the virtual NW.

In the example embodiment 1, described above, to implement the service requested from the user, the controller 100 identifies the communication nodes, such as VMs, associated with the so requested service, and causes the so identified communication nodes to drop into the position information on the physical NW so as to set a data path between the communication nodes on the physical NW

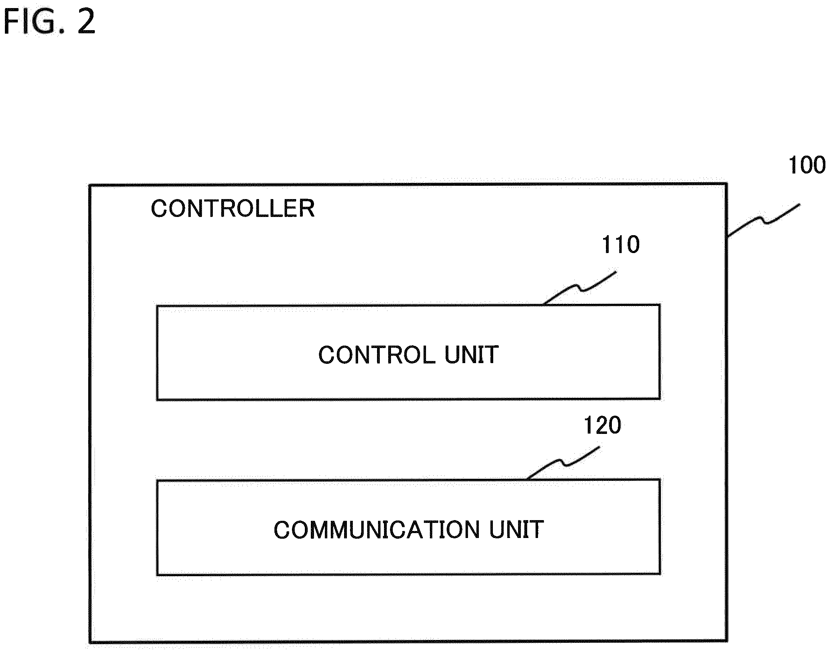

Fig. 2 shows an example configuration of the controller 100 in the example embodiment 1. Referring to Fig. 2, the controller 100 includes a control unit 110 and a communication unit 120.

The communication unit 120 is an interface capable of communicating with e.g., the physical node 200 or the communication node 210. The communication unit 120 is capable of forwarding e.g., a preset control signal to the physical node 200. For example, the communication unit 120 is capable of forwarding a set of processing rules or the forwarding information to the communication node 210.

The control unit 110 is capable of executing preset processing. The preset processing, executed by the control unit 110, is actually executed by e.g., a central processing unit (CPU) or a micro processing unit (MPU).

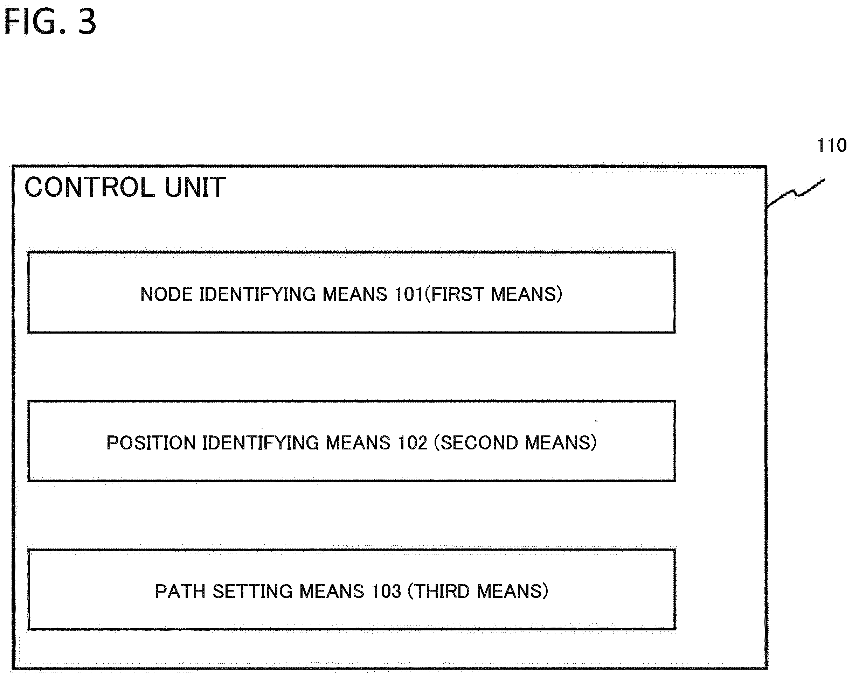

Fig. 3 depicts example processing executed by the control unit 110 in the example embodiment 1. Referring to Fig. 3, the control unit 110 is capable of executing a processing performed by a node identifying means 101 (a first means), a processing performed by a position identifying means 102 (a second means) and a processing performed by a path setting means 103 (a third means).

The node identifying means 101 identifies a communication node corresponding to the service as requested by the user. The "service as requested by the user" is a service that uses a virtual network, logically constructed using a virtual resources, such as vEPC, or a service that uses virtual resources or physical resources involved in a tenant corresponding to the user. The "service as requested by the user" may also be a user's request for a pre-existing virtual NW, such as user's desire to put server resources, such as VMs or physical servers, in a virtual network or to link the network to an external network. The "service as requested by the user" may also be a virtual network function (VNF) or a service chain.

The node identifying means 101 performs a role of identifying one or more communication nodes capable of providing such service. The "communication node" is equivalent to the above mentioned server resources, which may be VMs or physical servers. Dotted arrow lines drawn from the node identifying means 101 of Fig. 1 denote the operation of identifying the VM 300 corresponding to the virtual network at an upper tier, representing the service requested by the user.

The position identifying means 102 identifies the information regarding the position in the physical network of the communication node identified by the node identifying means 101. As the "position in the physical network," the terminal point information on the physical NW for the communication node identified by the node identifying means 101 may be used. For example, the terminal point information is an address, such as an IP (Internet Protocol) address or a MAC (Media Access Control) address of the communication node identified by the node identifying means 101.

The terminal point information may also be an address, such as an IP address or a MAC address, of a virtual switch the communication node identified by the node identifying means 101 is connected to. The terminal point information may also be a port number of a port used by the communication node in the virtual switch the communication node identified by the node identifying means 101 is connected to. The terminal point information may also be an address, such as an IP address or a MAC address, of the physical node 200 that implements the communication node identified by the node identifying means 101. The terminal point information may further be an address, such as an IP address or a MAC address, of a physical switch corresponding to the physical node identified by the node identifying means 101, such as the physical node 210.

Dotted arrow lines, drawn from the position identifying means 102 of Fig. 1, represent operations of the position identifying means 102 identifying the terminal point information of the VM 300 identified by the node identifying means 101, or the terminal point information of the physical node 200 corresponding to the VM 300.

The path setting means 103 sets a data path, necessary in implementing on the physical NW the service requested by the user, using the information regarding the position in the physical network of the communication node as identified by the position identifying means 102. The processing of "setting the data path" may be implemented by setting a set of flow entries or the route information in the physical node 210. The flow entry is a set of processing rules for the physical node 210 to process a packet belonging to a flow. The route information is the forwarding information used by the physical node 210 in forwarding a packet. Dotted arrow lines, drawn from the path setting means 103 of Fig. 1, represent operations for the path setting means 103 to interconnect the physical nodes 200 identified by the position identifying means 102 via the physical node 210 so as to set the data path.

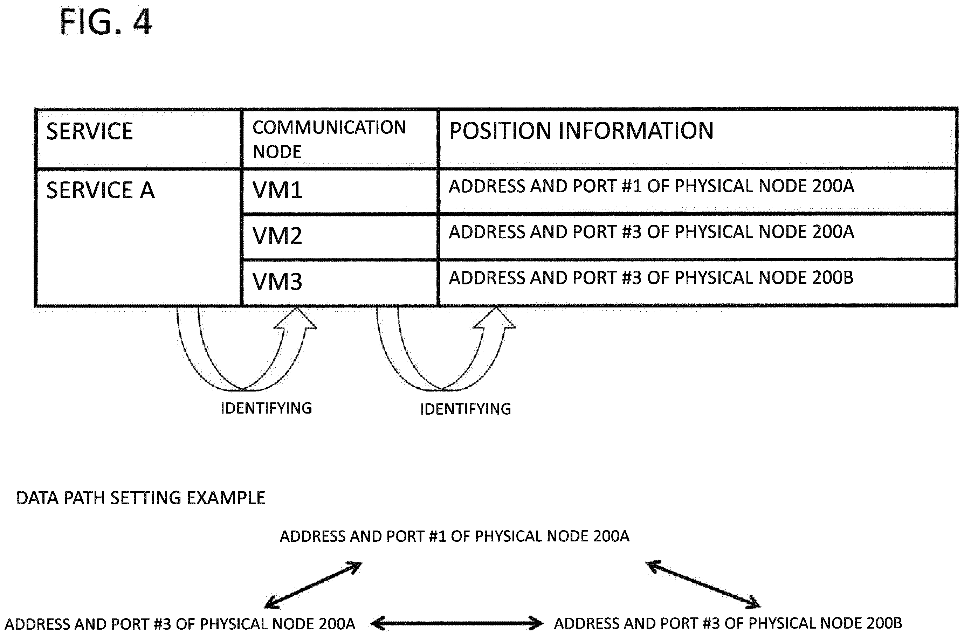

Fig. 4 shows an example table held by the controller in the example embodiment 1. An upper tier of Fig. 4 shows a table correlating the services, communication nodes and the position information for the physical nodes with one another. The node identifying means 101 indexes which resources are required in order to implement the service A. In the example embodiment of Fig. 4, for example, VM1 through VM3 are identified as resources necessary in implementing the service A. The position identifying means 102 indexes the information regarding the positions of the VM1 through VM3 in the physical NW, that is, the information as to which terminal points of which physical nodes the VMs in the physical NW are connected to. In the example embodiment of Fig. 4, addresses as well as ports of the physical nodes implementing the VM1 through VM3 are identified. As the node identifying means 101 and the position identifying means 102, executing such operations, the network resource management function, termed an agent, may be used.

The table shown in Fig. 4 may be held by the controller 100 as its service definition memory unit and mapping information memory unit. By so doing, it is possible to raise the speed of the identifying processing in the node identifying means 101 and the position identifying means 102. In the example embodiment of Fig. 4, the service definition memory unit and the mapping information memory unit are implemented by a sole table. However, the table may also be split into two, one being to store the relation of correspondence between the services and the communication nodes to provide the service definition memory unit, and the other being a table in which to store the relation of correspondence between the communication nodes and the position information on the physical NW to provide the mapping information memory unit.

The path setting means 103 sets a data path between VM1 through VM3, using the topology information of the physical NW and the address as well as the port (port number) of the physical node 200 identified. For example, a data path can be set between ports of the physical nodes 200 corresponding to the VM1 through VM3, as shown in the lower at Fig. 4, thereby implementing a virtual network of such topology in which the VM1 through VM3 are interconnected in a ring shape. Note double-headed arrow lines at the lower tier of Fig. 4 indicating data paths. Among those arrow lines, the data path between the physical node 200A and the physical node 200B may be implemented by setting the flow entries or the route information on the physical node 210. The topology information may be acquired from the topology information memory unit that stores the topology information.

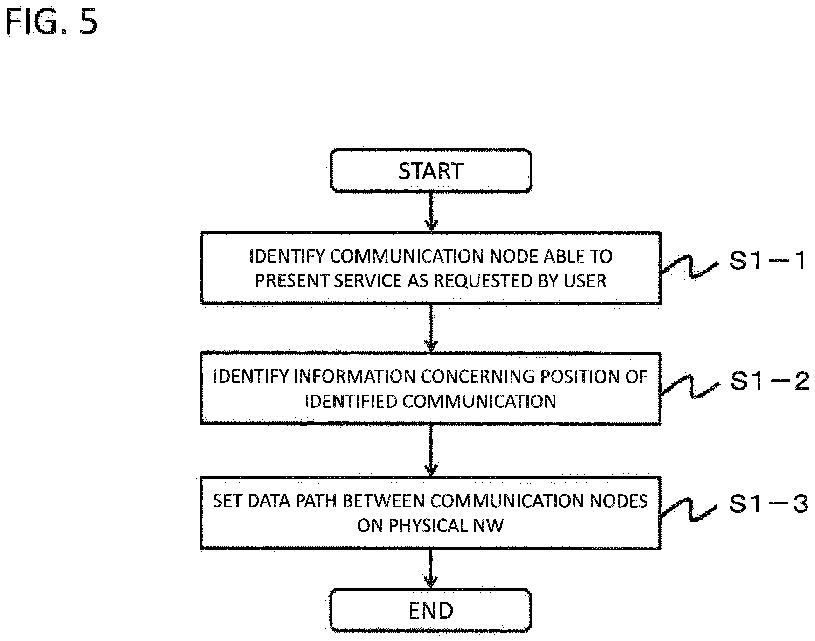

Fig. 5 depicts a flowchart showing an example operation of the controller 100 of the example embodiment 1.

Initially, the node identifying means 101 of the controller 100 identifies one or more communication node capable of presenting the service as requested by the user (S1-1). In the example embodiment of Fig. 1, the node identifying means 101 identifies a plurality of VMs 300 as the service requested by the user (virtual NW).

The position identifying means 102 of the controller 100 then identifies the information on the position in the physical NW of the communication node as identified by the node identifying means 101 (S1-2). In the example embodiment of Fig. 1, the position identifying means 102 identifies the terminal point information in the physical NW for each of the VMs 300 as identified by the node identifying means 101. The position identifying means 102 identifies, for each VM 300, the address on the physical NW of the physical node 200 that manages each VM 300 and the port number of the port of the physical node 200 corresponding to each VM 300.

The path setting means 103 then sets a data path between the communication nodes on the physical NW, using the information regarding the position in the physical NW of the communication node as identified by the position identifying means 102 (S1-3). In the example embodiment shown in Fig. 1, the path setting means 103 sets a data path(s) between the VMs 300 using the topology information of the physical NW as well as the address and the port (port number) of the physical node 200 identified by the position identifying means 102. It should be noted that, in the example embodiment of Fig. 1, in which a plurality of VMs are managed by respective distinct physical nodes 200, the path setting means 103 sets, for the physical node 210, a set of flow entries or the route information to enable communication between the distinct physical nodes 200 so as to set a data path(s) between the distinct physical nodes 200 as well.

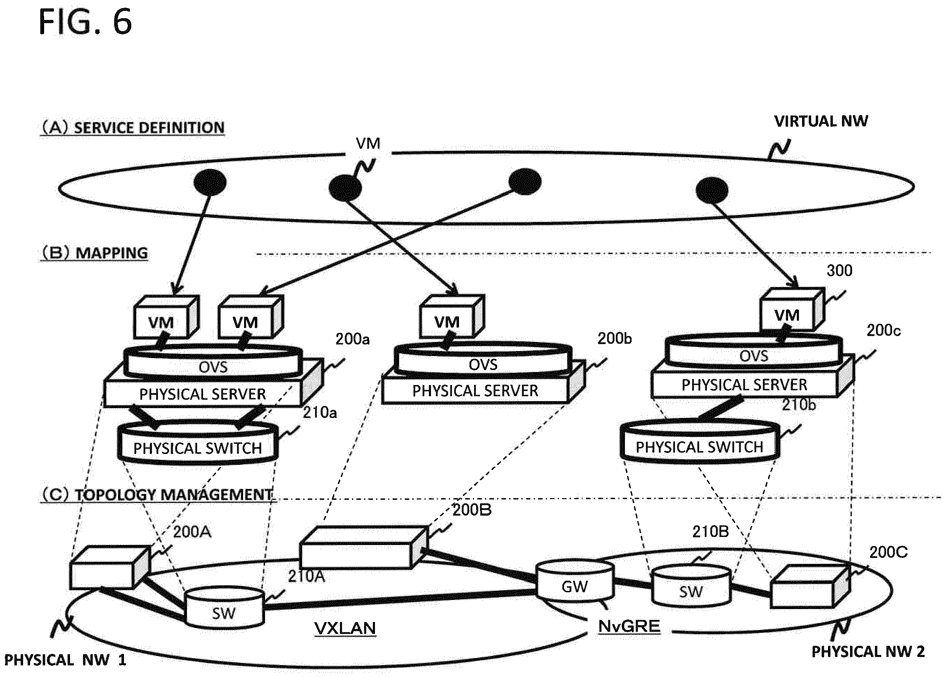

As may be surmised from the foregoing, the present invention may desirably be applied for such case where the physical network (physical NW) is constructed by a distinct tunneling protocol, such as VXLAN/ NvGRE. Fig. 6 shows another example configuration of the system of the example embodiment 1.

Referring to Fig. 6, there is shown a configuration made up of a physical NW1, constructed by a VXLAN (Virtual eXtensible Local Area Network), and a physical NW2, which is constructed by NVGRE (Network Virtualization using Generic Routing Encapsulation) and which is connected to the physical NW via a gateway (GW).

As an example, it is assumed that the information on a virtual network, in which four VMs are arranged as shown in Fig. 6, has been entered as the "service requested by the user" (see "(A) Service Definition" of Fig. 6(A)). Here, it is unnecessary for the user to know the configuration of the above mentioned construction of the physical network.

The node identifying means 101 identifies the communication node corresponding to the service as requested by the user. In the example embodiment of Fig. 6, the node identifying means 101 identifies the four VMs as run on the three physical servers 200a to 200c (see "(B) Mapping" of Fig. 6). At this stage, it is again unnecessary for the user to know on which physical network the VMs are in operation.

The position identifying means 102 identifies the information regarding the position in the physical network of the four VMs identified by the node identifying means 101. In the example embodiment of Fig. 6, the terminal point information on the physical NW of the four VMs is identified as the information regarding the four VMs. For example, the position identifying means 102 identifies addresses of the physical servers 200a to 200c on the physical NW where the four VMs are in operation.

The path setting means 103 then sets a data path, which implements the service on the physical networks NW1, NW2, as requested by the user, using the terminal point information identified and the topology information of the physical networks NW1, NW2. In the example embodiment shown in Fig. 6, there are set data paths interconnecting the physical servers 200A, physical switch 210A and the physical server 200B on the physical NW1 and data paths interconnecting the physical switch 210B as well as the physical server 200C on the physical NW2 via a gateway (GW), as shown at the lower tire of Fig. 6.

In the example embodiment 1, described above, to implement the service as requested by the user, the controller 100 identifies the communication node(s), such as VM(s), corresponding to the service requested by the user, and causes the communication node(s) to drop into the position information on the physical NW to connect them together so as to implement the service on the virtual network on the physical network.

### <Example Embodiment 2>

An example embodiment 2 according to the present invention, in which it is assumed to allow the use of the network resources involved in a tenant relevant to a user will now be described in detail in reference to the drawings. In the example embodiment 2, in case a request concerning a service is received from the user, the communication node(s), such as VM(s), involved in the tenant, relevant to the user, is identified. The communication node(s) is caused to drop into the position information on the physical NW to set a data path(s) on the physical NW between the communication nodes. Thus, by causing the service on the virtual network as requested by the user to drop into the position information on the physical network, and a means to implement its function, it becomes possible to implement the service on the virtual network on the physical network.

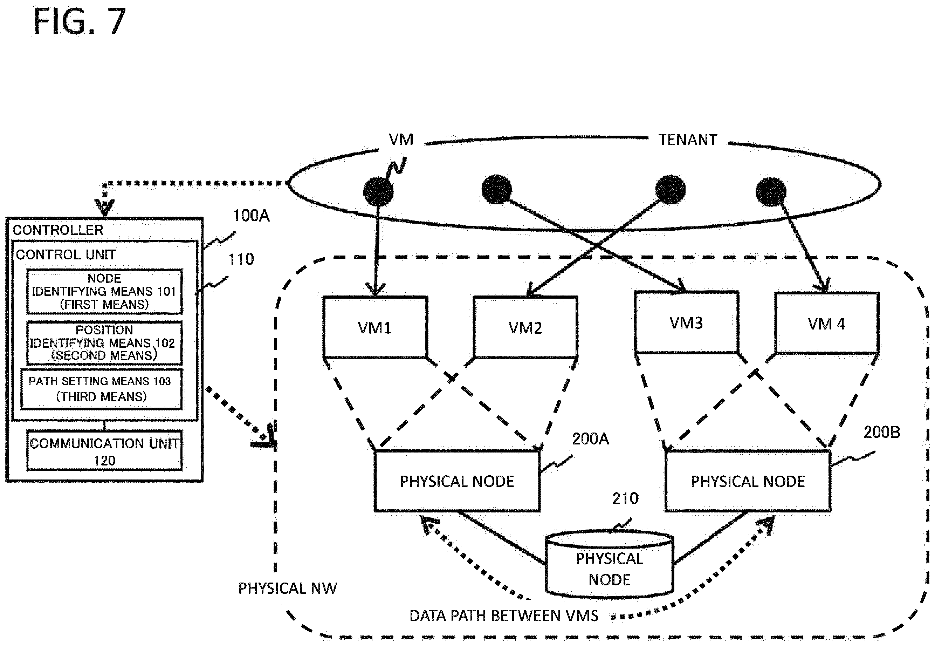

Fig. 7 depicts an example configuration of a system according to the example embodiment 2 of the present invention. A controller 100A is of a configuration about the same as the controller of the example embodiment 1, and includes a node identifying means 101, position identifying means 102 and a path setting means 103. The following description is centered about the point of difference from the example embodiment 1.

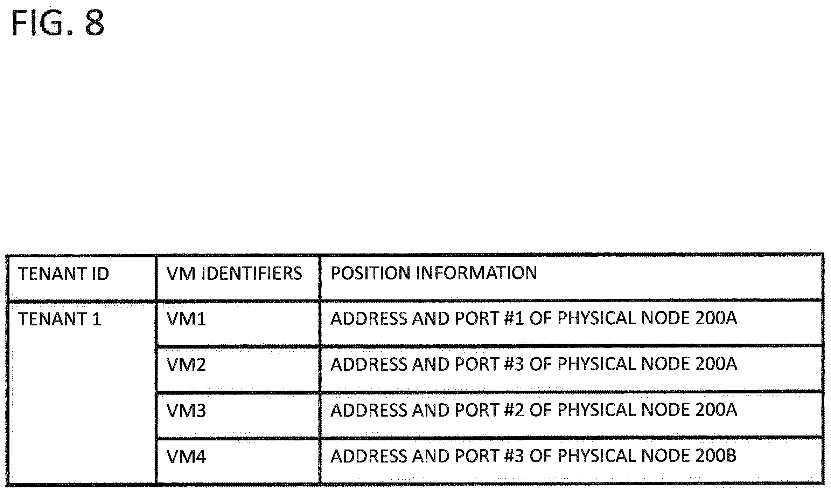

Fig. 8 depicts an example table held by the controller 100A of the instant example embodiment. The table is equivalent to a tenant definition memory unit and a mapping information memory unit. Referring to Fig. 8, there is shown a table correlating a tenant, communication nodes, such as VMs, and the position information of the physical nodes managing the communication nodes, with one another.

The node identifying means 101 indexes resources required to implement the service as requested by the user. As an example, the node identifying means 101 indexes the sorts of the resources necessary in implementing the service as requested by the user. The node identifying means 101 identifies the resources required to implement the service as requested by the user, from among the resources involved in the tenant relevant to the user. The node identifying means 101 may also index the volume of the resources required in addition to the their sorts. In the example embodiment of Fig. 8, VM1 to VM4, shown in Fig. 7, are identified from among the VMs involved in the tenant relevant to the user, as being the resources required for the service as requested from the user. The node identifying means 101 correlates the tenant 1 with a VM identifier that may uniquely identify each of the VM1 to VM4 required to perform the service as requested from the user. It should be noted that the resources required to perform the service as requested from the user are ICT (Information and Communication Technology) resources, such as servers, storages or network loads. The resources may be virtual resources, which may be virtually implemented using the VMs, or may also be physical resources. It should also be noted that the network nodes are devices providing the function necessary in constructing a network, such as switches, routers, firewalls or load balancers.

The position identifying means 102 indexes the information regarding the positions of the VM1 through VM4 on the physical NW. The position identifying means 102 indexes addresses of the VM1 through VM4 on the physical NW as well as port numbers of the ports correlated with the VM1 through VM4. The position identifying means 102 may also identify, as the information regarding the positions of the VW1 through VW4 on the physical NW, the addresses of the VW1 through VW4 or the addresses as well as port numbers of the virtual switches, the VW1 through VW4 are connected to.

The position identifying means 102 correlates VM identifiers of the VW1 through VW4, addresses of the physical node(s) 200 that implements the VW1 through VW4 and port numbers of the ports of the physical node(s) 200 corresponding to the VW1 through VW4, to one another, as shown in Fig. 8.

The path setting means 103 sets data paths between the VM1 through VM4, using the topology information of the physical NW as well as the addresses and the ports of the physical nodes 200 identified. As shown in a lower part of Fig. 7, it becomes possible for the VM1 through VM4 to communicate with one another by setting the data paths between the ports of the physical node 200 correlated with the VM1 through VM4.

It should be noted that, in the example embodiment of Fig. 7, the path setting means 103 sets data paths between the physical node 200A, managing the VM1, VM2, and the physical node 200B, managing the VM3, VM4. This allows for communication between the VM1 through VM4 even in case part or all of the VM1 through VM4 involved in the service requested by the user is run on respective distinct physical nodes 200.

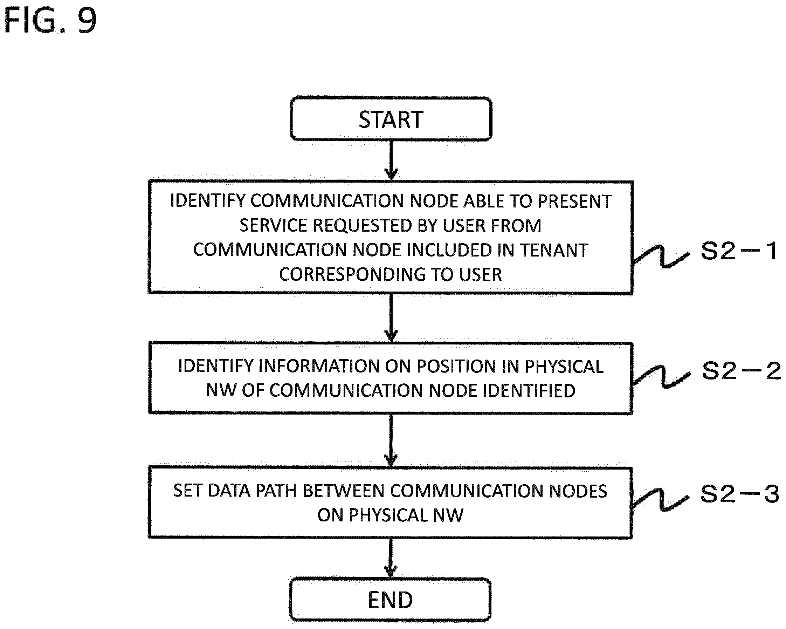

Fig. 9 depicts a flowchart showing an example operation of the controller 100A according to an example embodiment 2.

Initially, the node identifying means 101 of the controller A identifies one or more communication nodes necessary in implementing the service requested by the user (S2-1). In the example embodiment of Fig. 7, the node identifying means 101 identifies, as the resources required for the service as requested by the user, the VM1 through VM4 involved in the tenant corresponding to the user.

The position identifying means 102 of the controller 100A then identifies the information regarding the position in the physical NW of the communication node(s) as identified by the node identifying means 101 (S2-2). In the example embodiment of Fig. 7, the position identifying means 102 identifies the address of the physical node(s) 200 that implements the VM1 through VM4 as identified by the node identifying means 101 and the port numbers of the ports of the physical node(s) 200 correlated with the VM1 through VM4.

The path setting means 103 of the controller 100A then sets a data path(s) between the communication nodes on the physical NW, using the information regarding the position on the physical NW of the communication node(s) identified by the position identifying means 102 (S2-3). In the example embodiment of Fig. 7, the path setting means 103 sets a data path(s) between the VM1 through VM4, using the topology information of the physical NW, and also using the address and the port (port number) of the physical node(s) 200 as identified by the position identifying means 102. At this time, the path setting means 103 sets flow entries or the forwarding information that allow for communication between the physical nodes 200A and 200B, in the physical node 210 so as to set a data path(s) between the physical nodes 200.

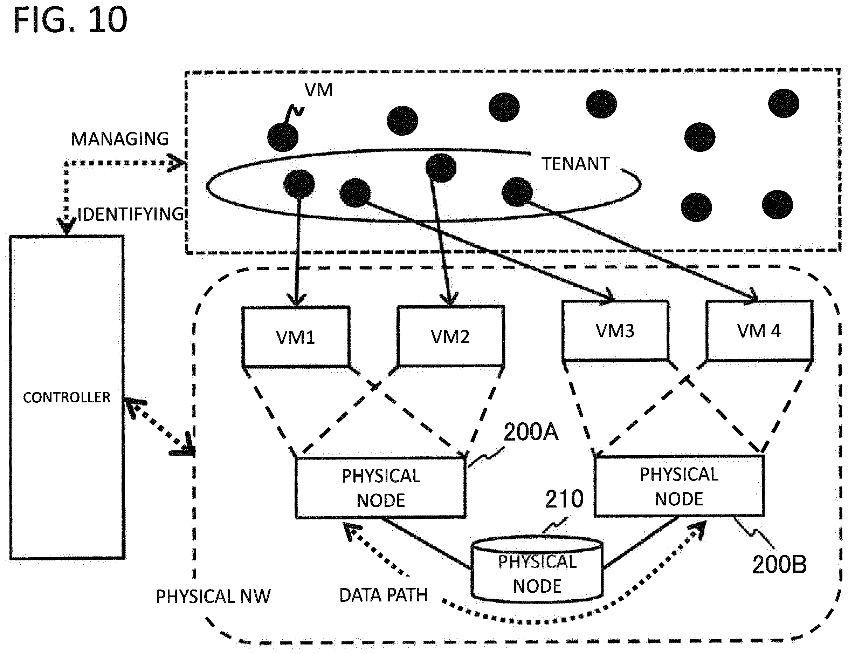

Fig. 10 depicts an example configuration of the controller 100A provided that the controller 100A supervises a plurality of resources. Referring to Fig. 10, the controller 100A uses part of the resources supervised to render a service as requested by the user. For example, the controller 100A is storing the multiple resources and selects one or more of the so stored resources required for the service as requested by the user.

The node identifying means 101 of the controller 100A indexes the resources required for the service requested by the user. The node identifying means selects, from among the indexed resources, those resources that are supervised by the controller and that are involved in the tenant corresponding to the user. As an example, the node identifying means 101 is supervising a plurality of VMs, and selects, from among the so supervised VMs, the VM(s) that is required for the service requested by the user. By the way, the multiple resources, supervised by the node identifying means, may include physical resources.

The node identifying means 101 supervises a plurality of VMs for each of the functions implemented using the VMs. The network functions, such as switches, routers, firewalls or the load balancers are among the functions implemented using the VM(s). The node identifying means supervises virtual switches, virtual routers, virtual firewalls or virtual load balancers exhibiting respective network functions virtually implemented by the VMs. The functions implemented by the VMs may also be the storage or memory function. The node identifying means 101 makes a disk or a drive in the physical server abstract to supervise the disk or the drive as a virtually implemented storage pool. The functions implemented using the VMs may also be any of a diversity of applications or desktops. The node identifying means may supervise any of a diversity of applications or desktops virtually implemented using the VMs.

In case the node identifying means 101 has indexed that the load balancer is required in rendering the service requested by the user, the node identifying means selects, for the tenant in question, the virtual load balancer which the node identifying means is supervising and which is involved in the tenant corresponding to the user in question.

The processing performed by the position identifying means 102 and the path setting means 103, after the node identifying means 101 has identified the resources required to perform the service requested by the user from among the pre-stored resources, is the same as the processing performed by the position identifying means 102 and the path setting means 103 shown in Fig. 7. Hence, no detailed description therefor is here not made for simplicity.

In the subject example embodiment, described above, to implement the service requested by the user, the controller 100A identifies the communication node(s), such as VMs, for performing the service as requested by the user, and causes the communication node(s) to drop into the position information on the physical NW so as to set a data path(s) between the communication nodes on the physical NW. Thus, by causing the service on the virtual network as requested by the user to drop into the position information on the physical network, and a means implementing its function, and performing relevant interconnection, it is possible to implement the service in the virtual network on the physical network.

### <Example Embodiment 3>

An example embodiment 3, in which the controller 100 of the example embodiment 1 or the controller 100A of the example embodiment 2 is added with the VM supervising function, will now be described in detail in reference to the drawings.

In the example embodiment 3, the controller 100 has the function to supervise the VMs. Hence, on receiving a request for additions of preset resources for the service requested by the user, it is possible to boot the VM(s) corresponding to the preset resources. By its fourth means, a VM(s) is newly booted. The controller 100 identifies, by its node identifying means through to its path setting means, the communication node(s) of the newly booted VM(s), and causes the communication node(s) to drop into the position information on the physical NW, thereby setting a data path(s) on the physical NW. Thus, in the example embodiment 3, in case the user requests adding the resources, it is possible to add the VM(s) for implementing the additions of the resources, and perform setting in the physical NW that may become necessary as the result of the addition of the resources.

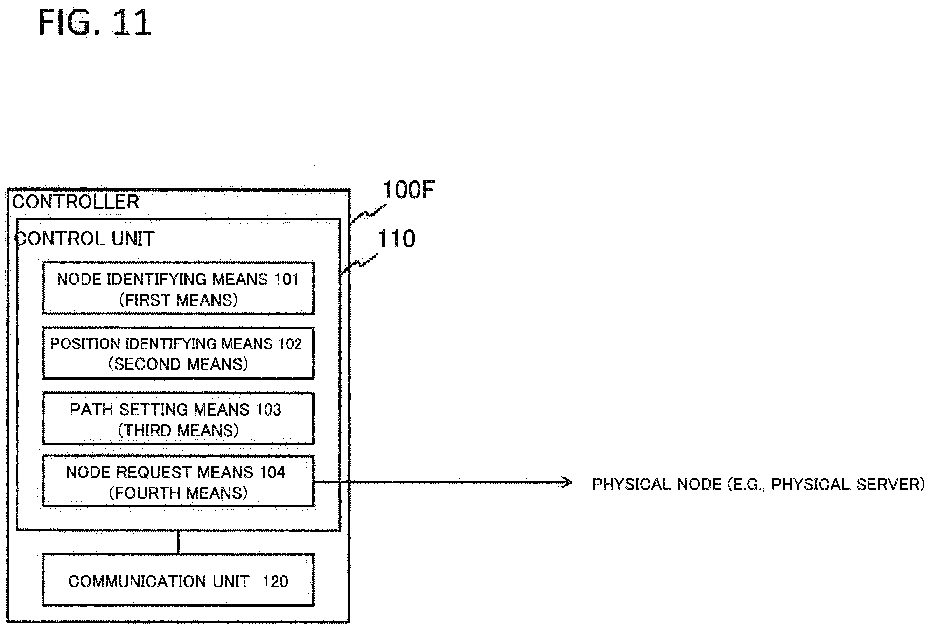

Fig. 11 depicts a configuration of a controller according to an example embodiment 3 of the present invention. Referring to Fig. 11, a control unit 110 of the controller 100F includes a node request means 104 (the fourth means) in addition to a node identifying means 101, position identifying means 102 and a path setting means 103. The ensuing description is centered about the point of difference from the example embodiments 1 and 2.

The node request means 104 boots the VM(s), required in offering the service, in response to a request from the node identifying means 101, and delivers the information regarding the VM(s) to the node identifying means 101. The node request means 104 may be implemented by an interface providing an instruction required for a control program, such as a VM manager (VMM) or a hypervisor supervising the VM(s) on the physical server 200 side. It should be noted that, although it is assumed in the subject example embodiment that the node request means 104 boots the VM(s), the communication node booted by the node request means 104 does not necessarily have to be the VM. For example such configuration may be used in which the node request means 104 boots the physical server in the sleep state to secure resources necessary in providing the service. Or, the node request means 104 may be provided with a function to terminate the VM(s) not in use so as to free the resources.

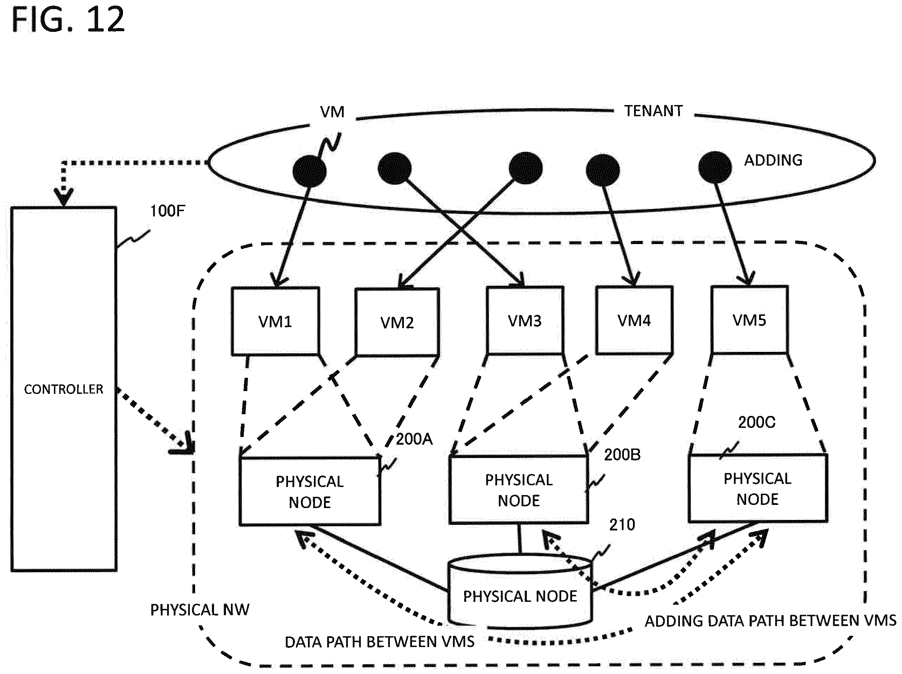

Fig. 12 depicts an example system configuration according to the example embodiment 3. As shown in Fig. 12, in case a user requests addition of resources, and there is no competent communication node, the node identifying means 101 requests the node request means 104 to boot the VM(s) competent for the resources added. For example, if addition of preset resources, such as a memory, is requested by the user corresponding to the tenant, the node identifying means 101 requests the node request means to boot a VM(s) to implement the preset resources.

On receiving the request, the node request means 104 boots a new VM(s), such as VM5 in Fig. 12, on the physical server shown at the right side of Fig. 12, and informs the node identifying means 101 about such effect. In response to the completion of the booting, the node request means 104 informs the node identifying means 101 about the completion of the booting. The node request means 104 may not only notify the node identifying means 101 about the completion of the end of the VM booting but also deliver the information regarding the VM(s) booted, such as an identifier of the booted VM(s). The node identifying means 101 identifies the newly booted VM(s) as being the virtual node involved in the service pertaining to the user's request. For example, the node identifying means 101 correlates the newly booted VM5 with a preset tenant (a tenant corresponding to the user).

The position identifying means 102 identifies the information regarding the position on the physical NW of the VM5 added by the node request means 104, for example, the information concerning its terminal point on the physical NW. For example, the position identifying means 102 identifies the address of the physical node 200C where VM5 is running and one of the ports of the physical node 200C correlated with the VM5.

The path setting means 103 sets data paths between VM1 through VM5, while also setting, for the physical node 210, a set of flow entries or the forwarding information that enables communication between the physical nodes 200A and 200C as well as communication between the physical nodes 200B and 200C. This allows for "communication on a physical NW" that is necessary in implementing the communication between VM1 through VM4.

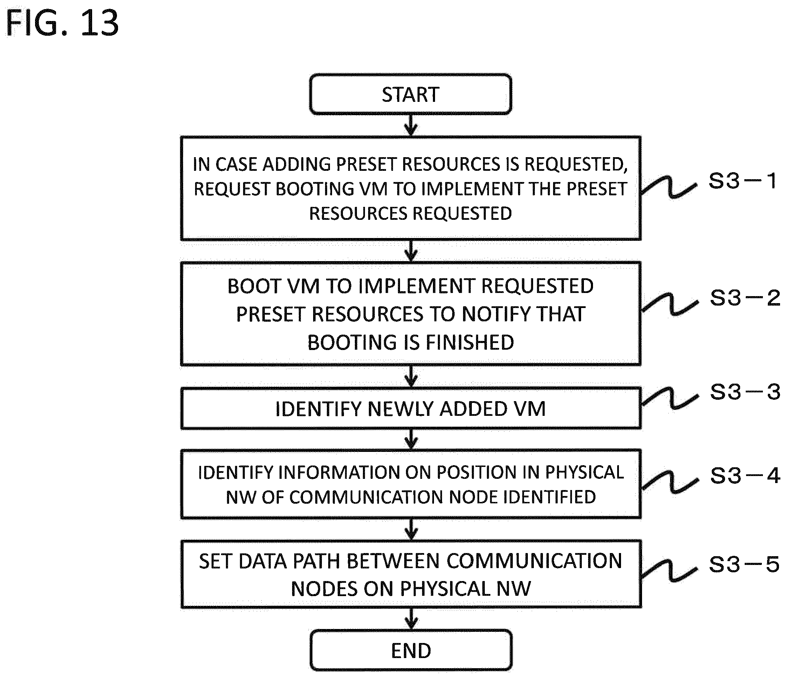

Fig. 13 depicts a flowchart showing an example operation of a controller 100F of the example embodiment 3.

In case a user has made a request to the node identifying means 101 of the controller 100F to add preset resources, such as a memory, the node identifying means requests the node request means to boot the VM(s) that implements the preset resources (S3-1). In the example embodiment of Fig. 12, if the request for memory addition is made from the user, the node identifying means requests the node request means to boot the VM that provides the storage function.

The node request means 104 boots a VM that implements the preset resources requested, in response to the request from the node identifying means 101, and informs the node identifying means 101 about the fact that the booting has finished (S3-2). In the example embodiment of Fig. 12, the node request means 104 boots the VM capable of providing the memory function, in response to the request for memory addition from the node identifying means 101.

On receiving the notification from the node request means 104, the node identifying means 101 identifies the newly added VM(s) (S3-3). In the example embodiment of Fig. 12, the node identifying means 101 correlates the newly booted VM5 with the preset tenant (the tenant corresponding to the user).

The position identifying means 102 identifies the information regarding the position on the physical NW of the VM added by the node request means (S3-4). This information may, for example, be the terminal point information on the physical NW. In the example embodiment of Fig. 12, the position identifying means 102 identifies the address of the physical node 200C and the ports of the physical node 200C correlated with the VM5.

The path setting means 103 sets a data path(s) between the pre-existing VM1 through VM4 and the newly booted VM5 (S3-5).

The controller of the example embodiment 3, described above, includes a VM supervising function to execute addition or deletion of the communication node(s), such as VM(s) (node request means). Thus, if addition of resources, for example, is requested from a user, the service on the virtual network, as requested by the user, may again be implemented on the physical network by causing a service on the virtual network requested by the user to drop into the position information on the physical network, and a means implementing its function, and performing relevant interconnection.

### <Example Embodiment 4>

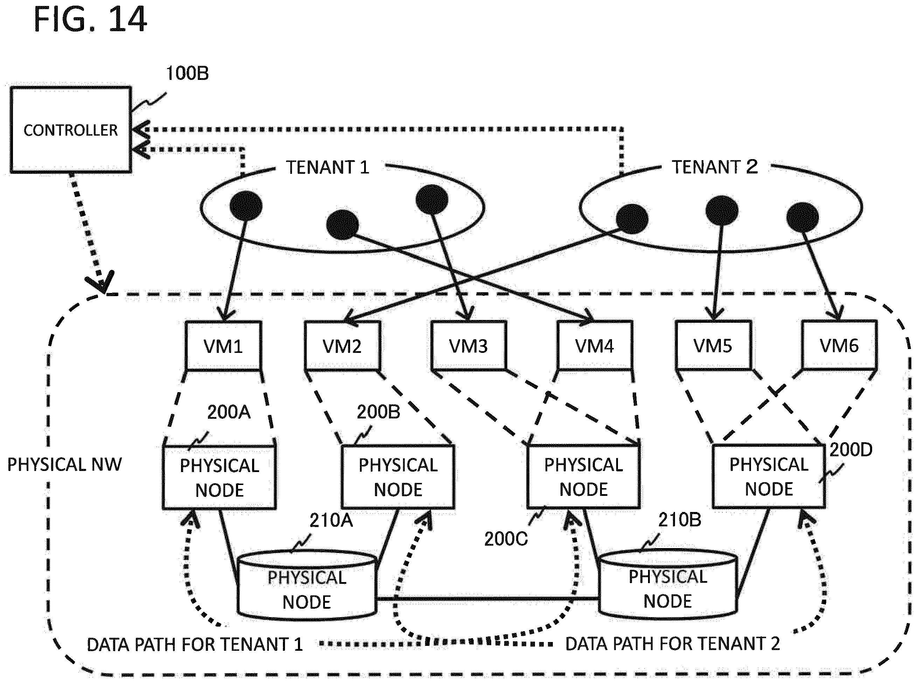

An example embodiment 4, in which the present invention is applied to a multi-tenant environment, will be described in detail in reference to the drawings. Fig. 14 depicts an example configuration of a system according to the example embodiment 4 of the present invention. Referring to Fig. 14, there is shown an arrangement in which a controller 100B supervises a plurality of tenants (tenants 1 and 2). Since the basic configuration of the controller 100B is the same as the example embodiment 2 or 3, described above, the following description is centered on the points of difference from those example embodiments.

A controller 100B is about the same in configuration as the controller 100F of the example embodiment 3 shown in Fig. 11, and includes a node identifying means 101, an information identifying means 102 and a path setting means 103.

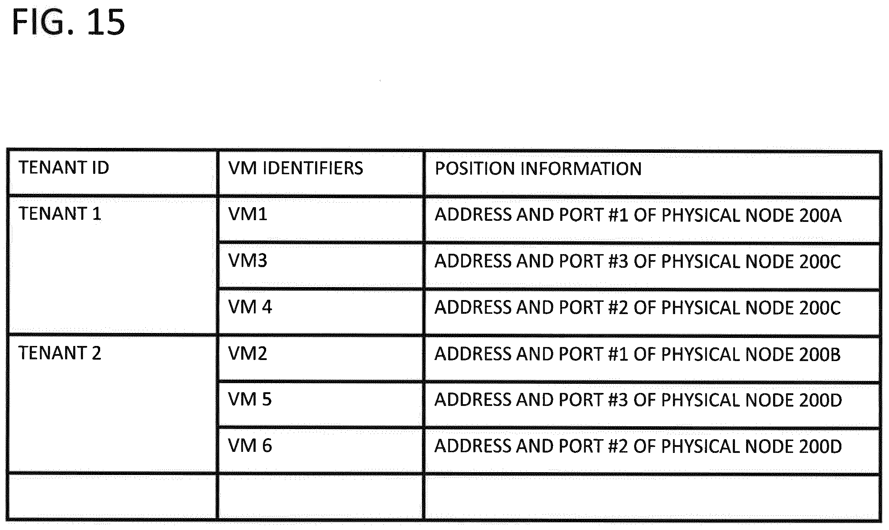

Fig. 15 depicts an example table held by the controller 100B of the subject example embodiment. In Fig. 15, there is shown a table that correlates the tenant(s), the communication node(s) and the position information of the communication nodes with one another. The node identifying means 101 indexes resources required to implement the service pertaining to the user's request, in response to the user's request. For example, the node identifying means indexes, in response to the request from a user A, that a firewall, a memory and a switch are required, while indexing, for a tenant 2, that a load balancer, a memory and a switch are required. The node identifying means 101 receives a request concerning a service A from the user A, while receiving a request concerning a service B from a user B. It should be noted that the node identifying means 101 may receive the requests concerning the services A and B from the same user. It is possible for the node identifying means 101 to receive the requests concerning the services A and B at respective different timings.

In the example embodiment of Fig. 15, the node identifying means 101 identifies the VM1, VM3 and VM4, shown in Fig. 14, from the VM(s) involved in the tenant 1 corresponding to the user A, in connection with the service A. The node identifying means 101 also identifies the VM2, VM5 and VM6, shown in Fig. 14, from the VM(s) involved in the tenant 2 corresponding to the user B, in connection with the service B. Specifically, the node identifying means 101 correlates respective identifiers of the VM1, VM3 and VM4 with the tenant 1, for the service A, while correlating respective identifiers of the VM2, VM5 and VM6 with the tenant 2, for the service B.

The position identifying means 102 indexes to which terminal point of which physical node is connected each of the VM1 through VM6 identified by the node identifying means 101 in the physical NW. In the example embodiment of Fig. 15, the position identifying means 102 indexes the addresses of the physical nodes 200 managing the VM1 through VM6 and the port numbers of the ports of the physical nodes 200 correlated with the VM1 through VM6.

The path setting means 103 sets data paths between the physical nodes 200 with the VM1, VM3 and VM4 booted, and between the VM2, VM5 and VM6, using the addresses and the ports of the physical nodes 200, identified by the position identifying means 102, and also using the topology information of the physical NW. For example, by setting the data paths between the VM1, VM3 and VM4, as shown at a lower part of Fig. 14, it becomes possible for the VM1, VM3 and VM4, involved in the tenant 1, to communicate with one another. Similarly, by setting the data paths between the VM2, VM5 and VM6, it becomes possible for the VM2, VM5 and VM6, involved in the tenant 2, to communicate with one another.

It should be noted that, like the controller of the example embodiment 3, the controller 100B of the example embodiment 4 may also contain a node request means 104. As in the controller of the example embodiment 3, if a request is made from the node identifying means 101, the node request means 104 boots the VM necessary in presenting the service, and delivers the information on the VM to the node identifying means 101. Since the processing by the node request means 104 is similar to that performed by the node request means 104 of the example embodiment 3, shown in Fig. 11, the detailed description therefor is not made for simplicity.

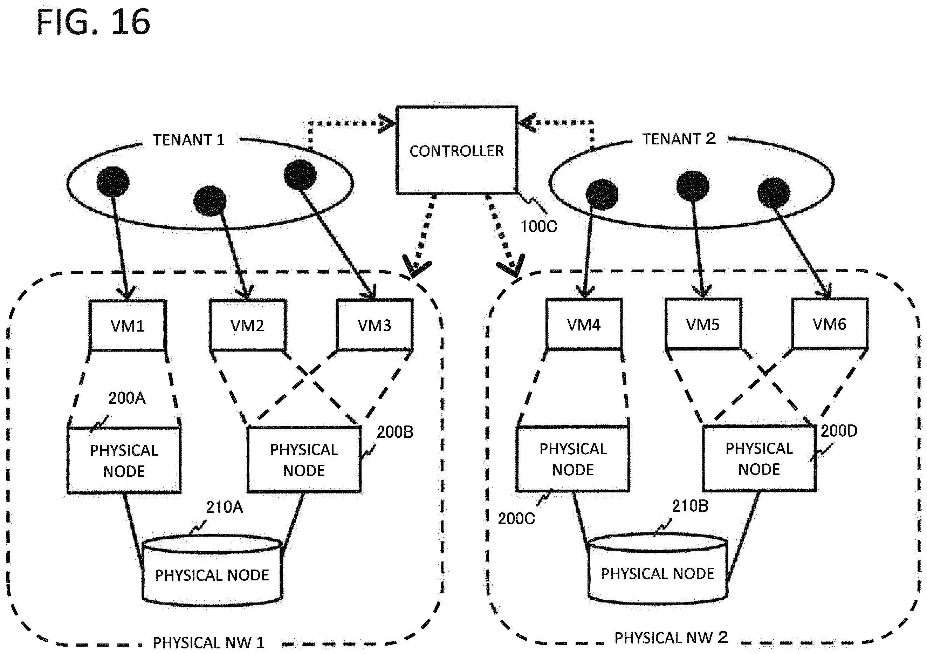

As described above, the present invention may be applied for tenant construction in a multi-tenant environment. It should be noted however that, although two tenants are constructed in the example embodiment of Fig. 14 on the sole physical network, the present invention may also be applied to a multi-tenant environment in which each one physical network and each one tenant are arranged in a one-for-one correspondence, as shown in Fig. 16.

Fig. 16 depicts another example configuration of the example embodiment 4. Referring to Fig. 16, the node identifying means 101 of the controller 100C identifies, for the service 1 as requested by the user, the VM1 through VM3 that are involved in the tenant 1 and that are disposed in the physical NW1. The node identifying means 101 of the controller 100C also identifies, for the service 2 as requested by the user, the VM4 through VM6 that are involved in the tenant 2 and that are disposed in the physical NW2. Specifically, the node identifying means 101 correlates respective identifiers of the VM1 through VM3 with the tenant 1, for the service 1 as requested by the user, while correlating respective identifiers of the VM4 through VM6 with the tenant 2, for the service 2 as requested by the user.

The position identifying means 102 indexes the addresses of the physical node 200, implementing the VM1 through VM3, identified by the node identifying means 101, and the port numbers of the ports of the physical node 200 correlated with the VM1 through VM3. Similarly, the position identifying means 102 indexes the addresses of the physical node 200, implementing the VM4 through VM6, identified by the node identifying means 101, and the port numbers of the ports of the physical node 200 correlated with the VM4 through VM6.

The path setting means 103 sets a data path(s) between the physical nodes 200, with the VM1 through VM3 boosted, using the addresses and the ports of the physical nodes 200 identified by the position identifying means 102. The path setting means 103 also sets a data path(s) between the physical nodes 200, with the VM4 through VM6 boosted, using the addresses and the ports of the physical nodes 200 identified by the position identifying means 102.

As described above, the present invention may be applied to tenant construction in the multi-tenant environment.

### <Example Embodiment 5>

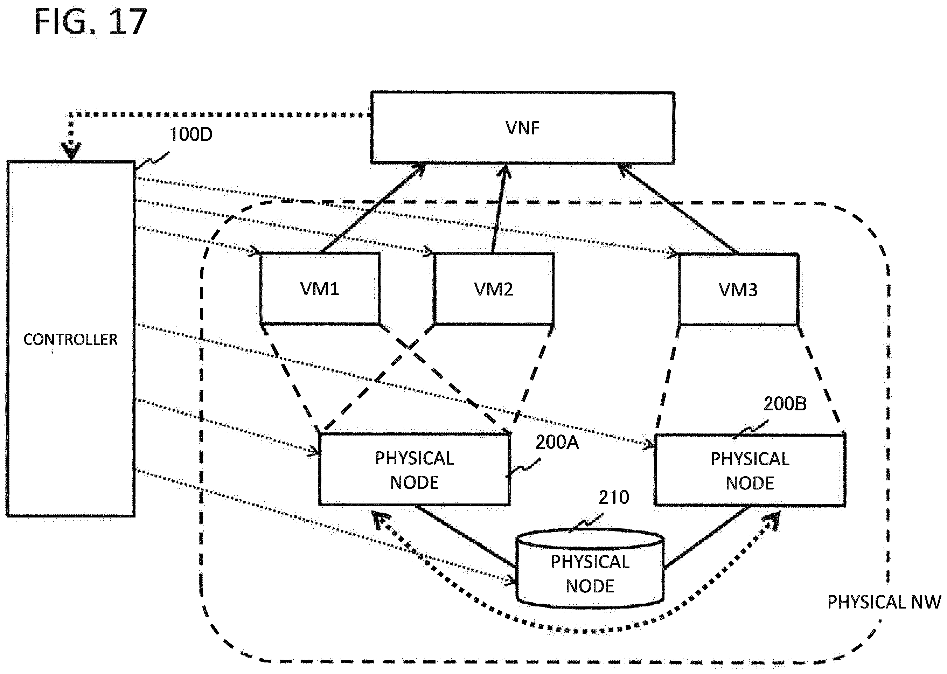

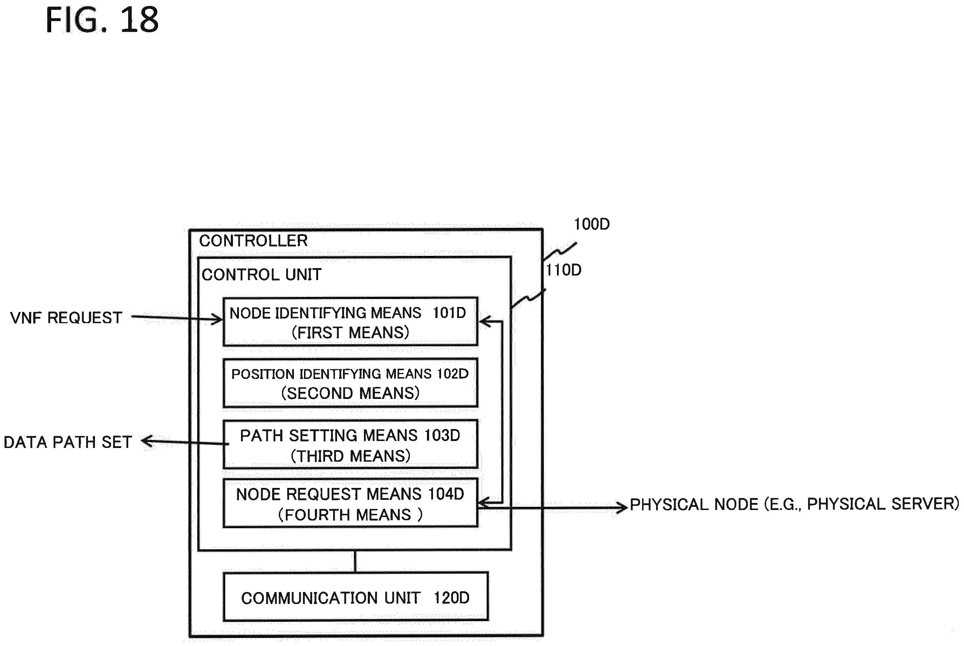

An example embodiment 5 according to the present invention, constructing a virtual network function (VNF) as requested by a user, will now be described in reference to the drawings. Fig. 17 depicts an example system configuration according to the example embodiment 5 of the present invention. Fig. 18 depicts an example configuration of a controller according to the example embodiment 5. Referring to Fig. 17 and Fig. 18, a controller 100D is similar in configuration to the controller of the example embodiment 5, and a control unit 110D of the controller 100D includes a node identifying means 101D, a position identifying means 102D, a path setting means 103D and a node request means 104D.

On receipt of a request for a VNF from the user, the node identifying means 101D identifies the VM correlated with the VNF. If, at this time, the VM capable of implementing the VNF as requested by the user has not been booted, a request is made to the node request means 104D to boot the VM that is required.

The position identifying means 102D identifies the information regarding the position in the physical NW of the VM 300 identified by the node identifying means 101D. The position identifying means 102D identifies the address of the physical node 200, where the VM1 through VM3 are in operation, and the port numbers of the ports of the physical node 200 correlated with the VM1 through VM3.

The path setting means 103D sets a data path(s) that implements the VNF as requested by the user on the physical network, on the physical NW, using the topology information of the physical NW and the information regarding the position in the physical network of the VM(s) as identified by the position identifying means 102D.

The node request means 104D boots a VM, required for providing the VNF, on the physical server 200, in response to the request from the node identifying means 101D, and delivers the information on the VM(s) to the node identifying means 101D. The node identifying means delivers an identifier of the VM(s) booted to the node identifying means 101D.

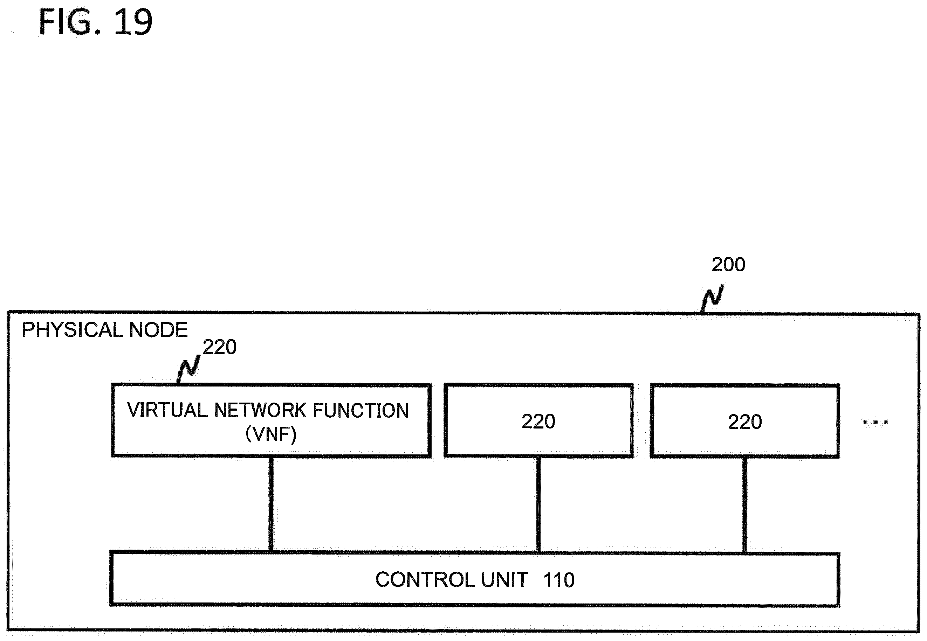

The scheme for the node request means 104D to boot the VM(s) will now be described. Fig. 19 depicts a detailed construction of a physical node 200 shown in Fig. 17. The physical node 200 manages a virtual machine providing the virtual network functions. Among the virtual network functions, there are functions of a firewall (FW), deep packet inspection (DPI), a load balancer (LW) and so on.

The communication node 200 may, for example be a server, a switch or a router. The communication node 200 manages a virtual machine providing the functions of virtual network nodes, such as virtual SGW (Serving Gateway), virtual PGW (Packet data network Gateway) or virtual MME (Mobility Management Entity), in the virtual network.

Each virtual network node has a number of functions. These include a function of processing a virtual PGW: packet (User-Plane function); a function of managing the tolling state in keeping with communication (policy and charging enforcement function (PCEF)); a policy and charging rule function (PCRF) for controlling a policy such as QoS (Quality of Service); a function of processing virtual SGW: packet processing function (user-plane function); a function of processing control signaling (C-plane function); a lawful interception unction (LI); a function of processing virtual MME; a control signaling or C-plane function; and a function of managing the subscriber information for a communication system operating in concert with the home subscriber server (HSS).

The physical node 200 includes a control unit 110 capable of constructing a virtual network function (VNF). The control unit 110 provides the function of the virtual network node by managing the VNF 220 on the virtual machine. The control unit 110 may be constructed by a control program, such as hypervisor, capable of implementing computer virtualization.

The control unit 110 is responsive to an instruction from the node request means 104D to perform such operations as booting, stopping or transporting the virtual machine managing the VNF 220. The operation of transferring the VM transports the virtual machine to a distinct communication device 100.

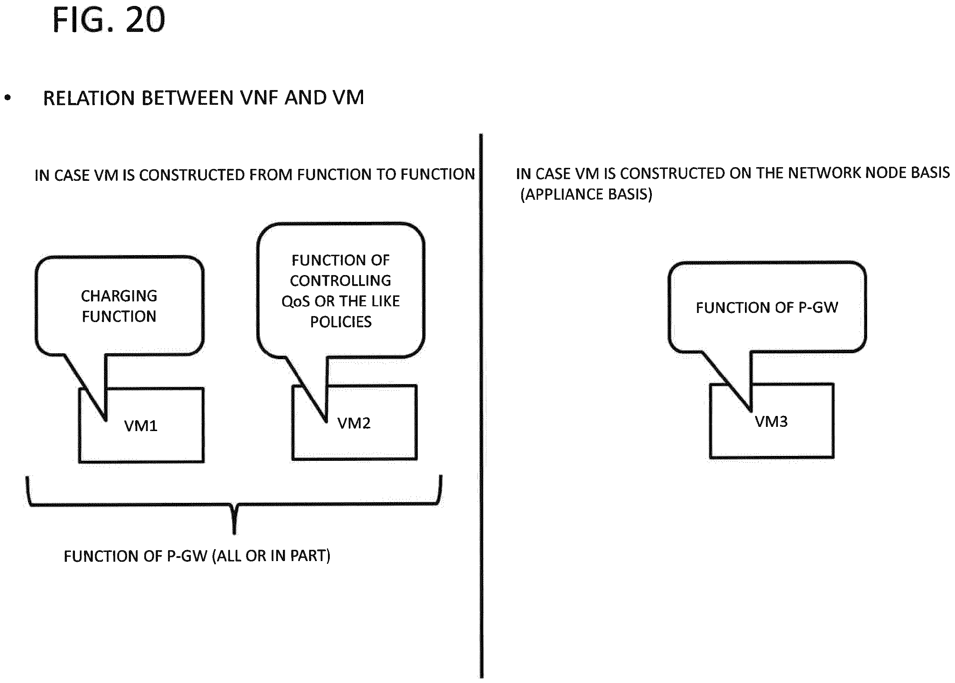

It should be noted that the VNF 220 and the VM are not necessarily in a one-for-one correspondence relative to each other. For example, if a virtual PGW is to be implemented, a VM1 having the function of tolling, included in the PGW function, can be booted independently of the VM2, performing policy control, such as QoS (Quality of Service) involved in the PGW function, as indicated at a left side of Fig. 20 (function-based VM). Of course, it is also possible to implement a virtual PGW by a VM3 having the function of a virtual PGW (appliance type VM), as indicated at a right side of Fig. 20.

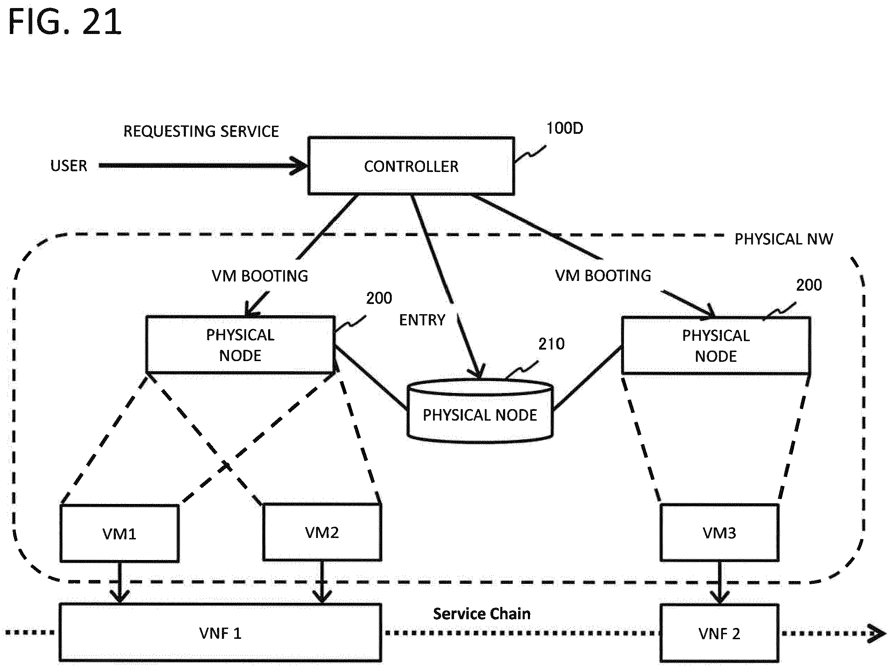

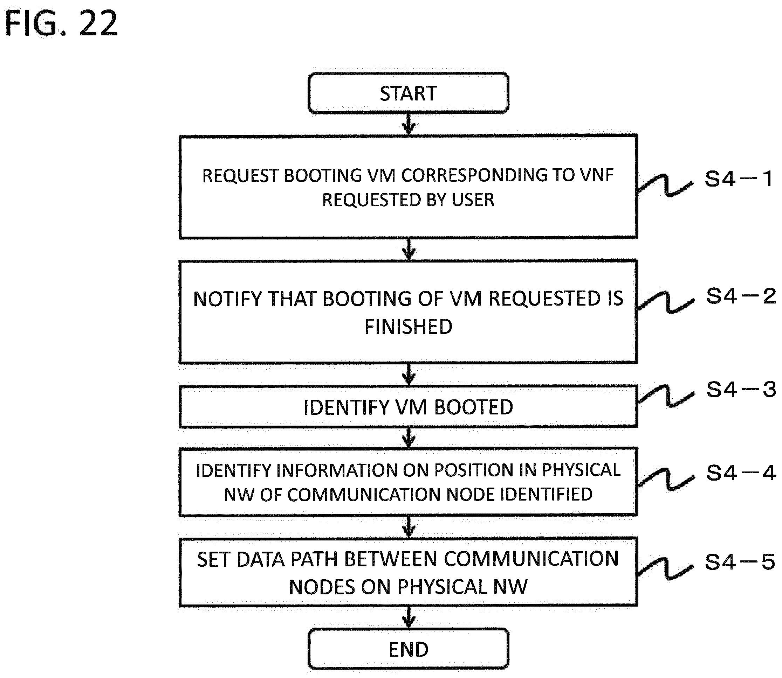

The operation of the subject example embodiment will now be described in reference to the drawings. Fig. 21 depicts an example system configuration according to an example embodiment 5 of the present invention. Fig. 22 depicts a flowchart showing an example operation of the example embodiment 5 of the present invention. It is assumed that a request has been made from the user to construct a service chain by interlinking the VNF1 and the VNF2. It is assumed that, in an initial state, none of the VMs has been booted. As in the above described example embodiments, the user need not know the configuration of the physical network or the state of booting of the VMs.

The node identifying means 101D requests the node request means 104D to boot the VM(s) correlated with VNF1, VNF2 as requested by the user (S4-1). The node request means 104D is responsive to a request from the node identifying means 101D to request the physical node to boot the VMs ("booting VM" of Fig. 21; S4-1 of Fig. 22).

This causes the VM1 through VM3 to be booted, as shown in a lower part of Fig. 21. The node request means 104D is responsive to the booting of the VM to notify the node identifying means 101D of the completion of VM booting (S4-2). The node identifying means 101D is responsive to the notification of the end of VM booting from the node request means 104D to identify the VM1 through VM3 booted (S4-3). The position identifying means 102D then identifies the information regarding the positions in the physical network of the three VM1 through VM3 identified by the node identifying means 101D (S4-4).

The path setting means 103D then sets a data path(s) between the VM1 through VM3, using the information regarding the positions of the VM1 through VM3 in the physical network and the topology information of the physical NW (S4-5). The path setting means 103D also sets, in the physical node 210, the flow entries or the route information so as to allow communication between the physical node 200 where the VM1 through VM3 are already booted. This sets data paths on the physical network (NW) necessary in implementing the VNF and the service chain as requested by the user.

Thus, in the subject example embodiment, the service chain shown in a lower part of Fig. 21 can be implemented by causing the service chain requested by the user, or the VNF, free from statements of addresses or resources, to drop into the position information on the physical network and the function implementing means (VMs), and by performing the relevant interconnection.

It should be noted that the data path(s) between the VNFs (VMs) run on the same physical node can be implemented by making an instruction to a path control unit 2101 mounted on board the control unit 110 provided within the physical node 200.

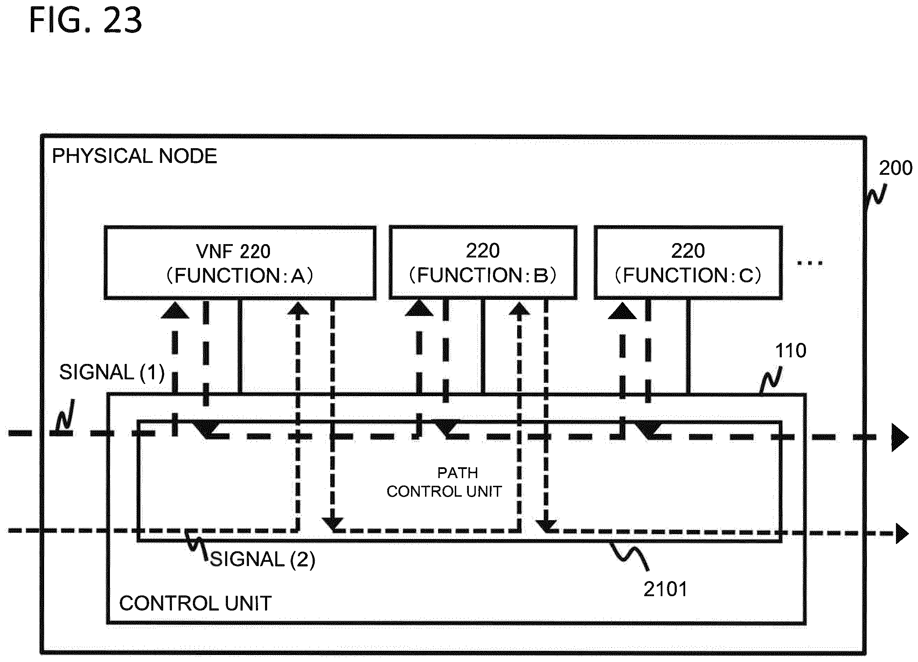

Fig. 23 depicts a schematic view showing an example data path set in the physical node 200 run in concert with the controller 100D of the example embodiment 5 of the present invention. In the example embodiment of Fig. 23, the control unit 110 sets a VNF path traversing the VNF(A), VNF(B) and VNF(C), for the signal (1), while setting a VNF path traversing the VNF(A), VNF(B), for the signal (2).

Specifically, the path control unit 2101 of the control unit 110 forwards a signal on a route(s) depending on the signal sorts as represented in Fig. 23.

As regards the signal sorts, a packet may be forwarded based on the MAC or IP address allocated to the VNF 200. The forwarding route may be modified using the sorts of a "bearer", a virtual connection transferring the packet, or on the attribute of the packet that may be discriminated based on the information within the packet.

It is also possible to cause the path control unit 2101 to control the VNF path based on the volume of communication in the user (terminal 1), load or volume of communication of the communication system or on the state of the load on the server 20. Similarly, the VNF path of the packet belonging to the bearer may be controlled depending on the volume of communication of the bearer. The VNF path may also be modified depending on the communication volume surpassing a preset threshold value.

It is also possible to cause the path control unit 2101 to select the VNF 200, constituting the VNF path, in dependence upon the state of load on the VM. It is also possible to cause the path control unit 2101 to preferentially select the VNFs 200 including the same function and lesser in the load of the virtual machines so as to switch the so selected VNF paths.

The path control unit 2101 may be constructed by a virtual switch (vSwitch) constructed by software. In this case, the path setting means 103D sets the route information or the flow entry in the switch operating as the path control unit 2101.

As described above, the present invention may advantageously be applied for a system implementing the virtualization of the network function.

### <Example Embodiment 6>

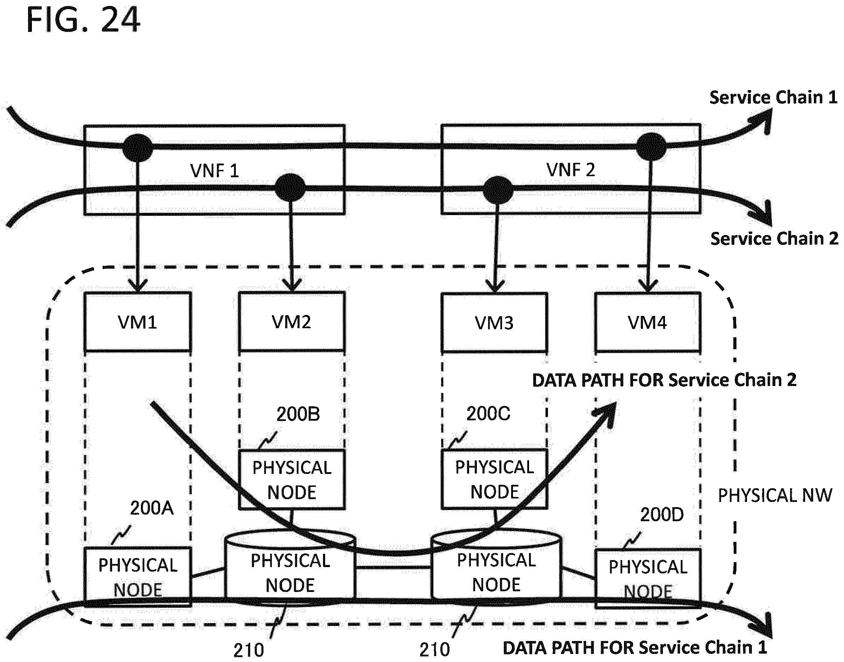

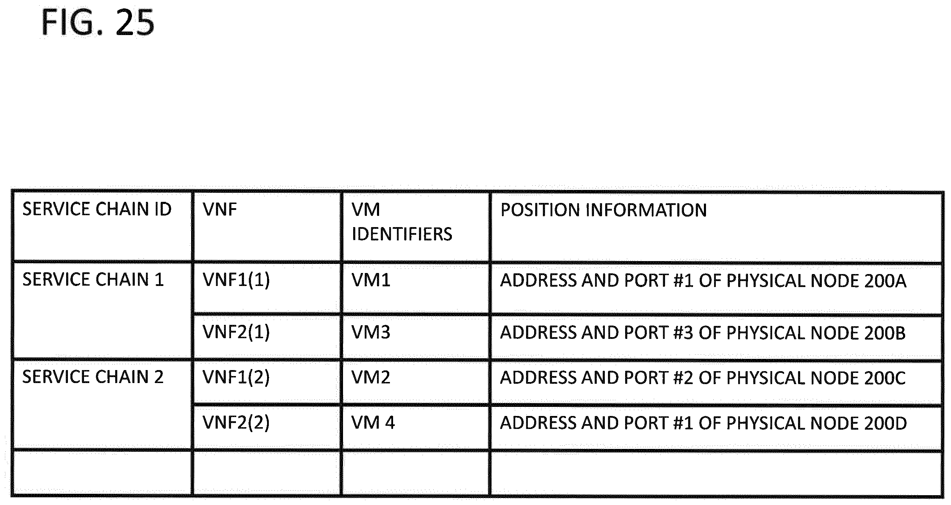

An example embodiment 6 of the present invention, constructing a service chain as requested by the user, will now be described in detail in reference to the drawings. Fig. 24 depicts an example configuration of a system according to the example embodiment 6 of the present invention. Fig. 25 depicts an example table held by a controller 100A of the subject example embodiment. The table is equivalent to a tenant definition memory unit and a mapping information memory unit. The table shown in Fig. 25 correlates a service chain(s), a VNF(s) required in the service chains, a VM(s) correlated with the VNFs and the position information of the physical nodes managing the VMs, with one another. Since the subject example embodiment may be implemented by a configuration similar to the example embodiment 5 managing the VNFs, the following description is centered on the points of difference from the example embodiment 5.

The controller of the subject example embodiment is similar to the controller 100D of the example embodiment 5 and includes a node identifying means 101D, a position identifying means 102D, a path setting means 103D and a node request means 104D (see Fig. 18). It should be noted that the node request means 104D in the controller 10D may be dispensed with if so desired.

On receipt of a request from a user for provisioning the service chain, the node identifying means 101D identifies the VM correlated with the service chain. See arrow lines drawn from the VNF1, VNF2 of Fig. 24. By the way, it is possible for the node identifying means 101D to identify the VNF required for the service chain, as requested by the user, so as to identify the VM correlated with the so identified VNF. As shown in Fig. 25, the node identifying means 101D correlates the service chain 1 with the VNF1 (1) and VNF1 (2), while correlating the VNF1 (1) with VM1 and correlating the VNF1 (2) with VM3. The node identifying means 101D also correlates the service chain 2 with the VNF1 (2) and VNF2 (2), while correlating VNF1 (2) with VM2 and correlating the VNF2 (2) with VM4.

If the VNF capable of implementing the service chain requested by the user has not being booted, the node identifying means 101D requests the node request means 104D to construct the required VNF.

The position identifying means 102D identifies the information regarding the position in the physical network of the communication node identified by the node identifying means 101D. See arrow lines drawn from the VM1 through VM4 of Fig. 24 to the physical node. The position identifying means 102D identifies, for each of the VM1 through VM4, the addresses on the physical network of the physical nodes 200, implementing the VM1 through VM4, while also identifying the port numbers of the ports of the physical node 200 correlated with the VM1 through VM4. As illustrated in Fig. 25, the position identifying means 102D correlates the VM1, the address of the physical node 200 and the port number #1 to one another.

The path setting means 103D sets a data path(s), implementing the service chain as requested by the user, on the physical NW, using the topology information of the physical NW and the information on the position(s) on the physical NW of the VM(s) identified by the position identifying means 102D. See the data path for the service chains 1 and 2.

The node request means 104D is responsive to the request from the node identifying means 101D to boot on the physical server 200 the VM(s) required to present the VNF so as to provide the information on the VM(s) to the node identifying means 101D.

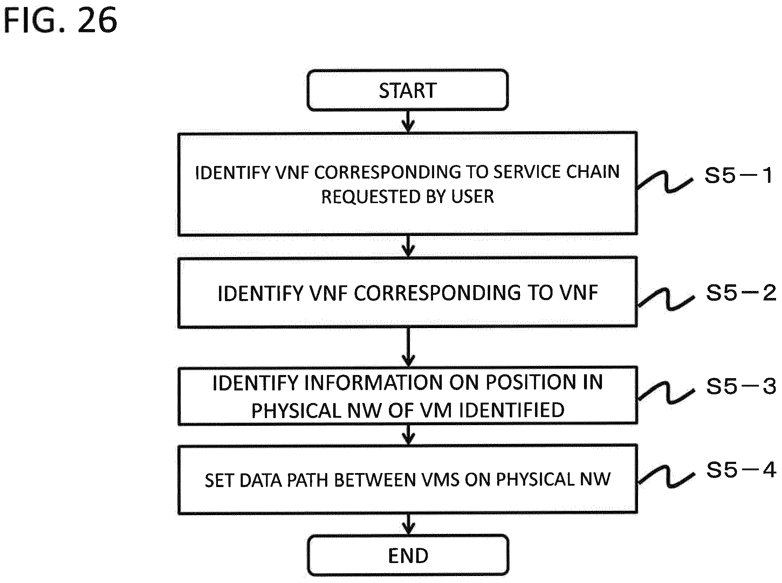

Fig. 26 depicts a flowchart showing an example operation of the controller 110D according to the example embodiment 6 of the present invention.

The operation of the subject example embodiment will now be explained in reference to the drawings. In the description to follow, it is presumed that construction of two service chains shown in Fig. 24 has been requested by the user. It is unnecessary for the user to know the configuration of the above described physical network.

Initially, the node identifying means 101D identifies the VNF correlated with the service chain as requested by the user (S5-1), and then identifies the VM correlated with the VNF (S5-2). In the example embodiment of Fig. 25, the node identifying means 101D identifies that the service chain 1 passes through VNF1, VNF2 and that the VNF1, VNF2 are correlated respectively with the VM1, VM3. Similarly, the node identifying means 101D identifies that the service chain 2 passes through VNF1, VNF2 and that the VNF1, VNF2 are correlated respectively with the VM2, VM4. By the way, the table of Fig. 25 is equivalent to the service chain definition memory unit and the mapping information memory unit.

The position identifying means 102D then identifies the information regarding the positions on the physical network of the four VMs as identified by the node identifying means 101D.

The path setting means 103D then sets a data path that implements the service chain, as requested by the user, on the physical NW, using the information regarding the positions on the physical network of the two sets of the VMs and the topology information of the physical NW (S5-4). In the example embodiment of Fig. 24, a data path(s) is set between the VM1 and VM4 for the service chain 1, while another data path(s) is set between the VM2 and VM3 for the service chain 2. It should be noted that, in the case of the service chains, even if they offer the same service, there are occasions wherein the data paths on the physical network are distinct because of the difference in the VMs correlated with the service chains. Moreover, it is not strictly necessary to use the same VNF even though the service chains offering the same service are constructed using the same VNFs in the example embodiment of Fig. 24.

In the subject example embodiment, described above, to implement the service chain as requested by the user, the communication node, such as VM, correlated with the service chain as requested by the user, is identified. The communication node is caused to drop in the position information on the physical NW so as to set the data path on the physical NW between the communication nodes. Thus, by causing the service on the virtual network as requested by the user to drop into the position information on the physical network and a means implementing its function, and performing relevant interconnection, it is possible to implement the service chain in the virtual network on the physical network.

### <Example Embodiment 7>

An example embodiment 7 according to the present invention will now be described in reference to the drawings. Since the functions of the controller or the like are the similar to those of the example embodiment 3, the description to follow is centered on the points of difference of the subject example embodiment from the example embodiment 3.

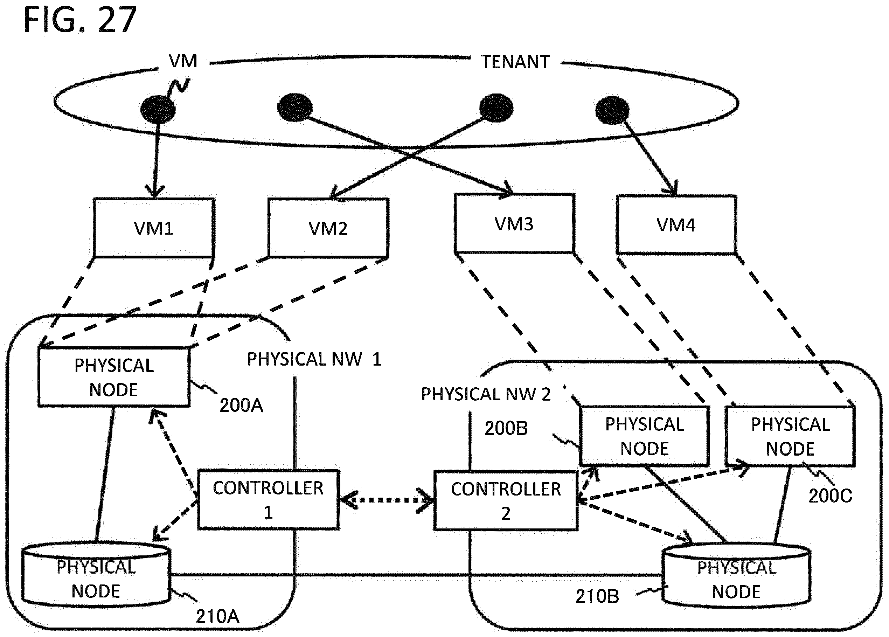

Referring to Fig. 27, in the example embodiment 7 of the present invention, respective different controllers are arranged in the respective physical NWs. For example, different physical NWs are arranged in respective different data centers, and a controller is arranged in each of the physical NWs. Each controller supervises the physical NW allocated. It is possible to construct the service as requested by the user across difference physical NWs. It is then possible for each controller to share the information collected and identified by the respective node identifying means 101 and the position identifying means 102 and set a data path(s) across different physical NWs so as to implement the service as requested by the user. In the description to follow, it is assumed that the service as requested by the user is identified from the communication node involved in a tenant corresponding to the user. It is noted that the service may, for example, be a service chain.

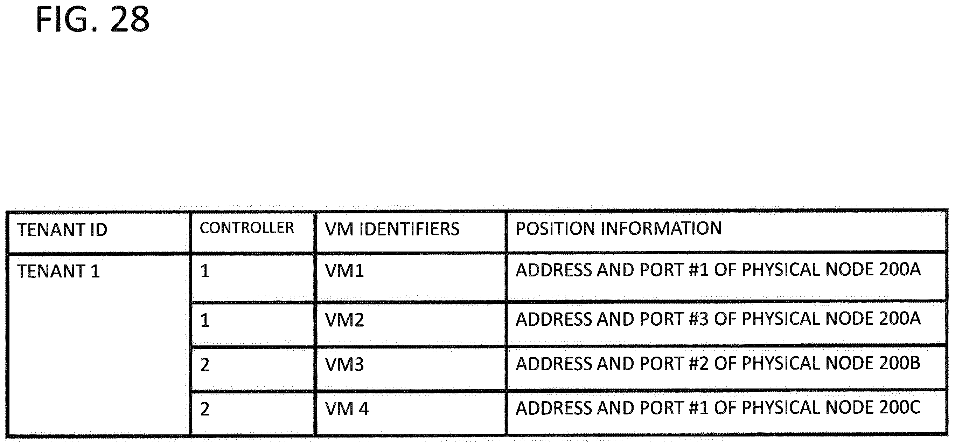

Fig. 28 depicts an example table prepared as a result of controllers 1 and 2 of the subject example embodiment exchanging the information. This example table is equivalent to the definition memory unit and mapping information a memory unit. Referring to Fig. 28, the tenant(s) corresponding to the user who requested the services, an identifier(s) of VMs (VM1 through VM4) that implements the services, a controller(s) supervising the VM1 through VM4 (controllers 1, 2) and the position information of the VM1 through VM4 on the physical NW, are stored correlated with one another.

In Fig. 28, the information regarding VM1 and VM2, supervised by the controller 1, that is, the VM identifiers and the position information of the physical nodes, are identified by the controller 1. On the other hand, the information regarding the VM3 and VM4, supervised by the controller 2, that is, the VM identifiers and the position information of the physical nodes, are identified by the controller 2.

The controllers 1, 2 share the information they have identified, that is, the identifiers of the VMs they are supervising and the position information of the physical nodes. The controllers 1, 2 exchange the information by e.g., the border gateway protocol (BGP). It is possible for the controllers 1, 2 to exchange the position information on the physical NW and the VMs by exchanging the table shown in Fig. 28. The controller 1 transmits an upper part of the table of Fig. 28, identified by the controller 1, to the controller 2. On the other hand, the controller 2 transmits a lower part of the table of Fig. 28, identified by the controller 2, to the controller 1. The controllers 1, 2 may thus exchange the information shown in Fig. 28.

By the way, the information exchanged by the controllers 1, 2 may include the topology information on the physical NW.

The path setting means 103 of the controllers 1, 2 may set the data path(s) on the physical NW necessary in implementing the service as requested by the user. Or, one of the controllers 1, 2 may set the total of the data paths, based on the shared information, such as the table shown in Fig. 28, to take the place of the other controller.

The controller 1 sets, for a physical node 210A, the processing rules or the forwarding information that forwards a packet from VM1 or VM2 to the physical node 210B. The controller 1 also sets, for the physical node 210A, the processing rules or the forwarding information that forwards a packet from VM3 or VM4, sent from the physical node 210B, to the VM1 or the VM2.

Similarly, the controller 2 sets, for the physical node 210B, the processing rules or the forwarding information that forwards the packet from the VM3 or the VM4 to the physical node 210A. The controller 2 sets, for the physical node 210B, the processing rules or the forwarding information that forwards the packet from the VM1 or VM2, forwarded from the physical node 210A, to the VM3 or the VM4.

This allows the controllers 1, 2 to set a data path(s) between VM1 through VM4 on the physical NW so as to implement the service as requested by the user.

As described above, the present invention may be applied to implementing a service chain or a tenant across networks physically isolated from each other, for example, across networks provided within distinct DCs.

### <Example Embodiment 8>

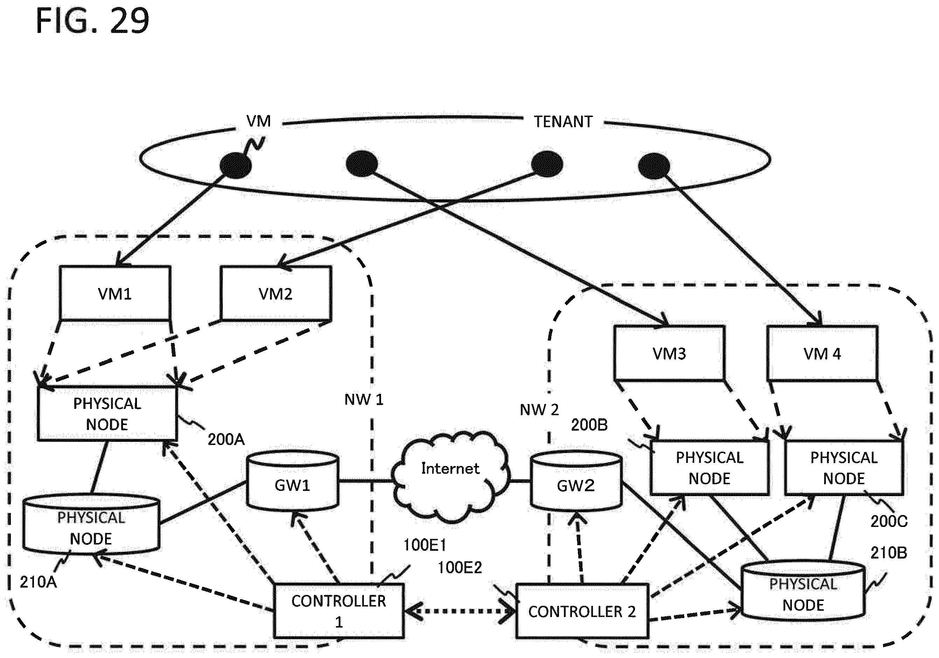

An example embodiment 8, modified from the above example embodiment 7, will now be explained in reference to the drawings. Fig. 29 depicts a configuration of the example embodiment 8. Although the subject example embodiment is similar to the example embodiment 7, the subject example embodiment differs as to the communication protocol (tunneling protocol) of the physical NW1 and that of the physical NW2, so that it would not be possible to construct a data path if the difference is left as it is. The following description is centered about this point of difference.

As shown for example in Fig. 29, the example embodiment 8 is constructed by a tunneling protocol having a different physical network (physical NW), such as VXLAN/ NvGRE. Specifically, the communication system of the example embodiment 8 includes a physical NW1, constructed by VXLAN (Virtual eXtensible Local Area Network) and a physical NW2, constructed by NVGRE (Network Virtualization using Generic Routing Encapsulation), in which the physical NW1 and the physical NW2 are interconnected via the Internet by gateways GW1, GW2. It is also possible to use WAN (Wide Area Network) between the physical NW1 and the physical NW2.

A control unit 10 of controllers 100E1 and 100E2 exchange the topology information of the physical NW1 and the physical NW2 via the communication unit 120. The controllers 100E1 and 100E2 exchange the topology information by e.g. the BGP.

The node identifying means 101 of each of the controllers 100E1 and 100E2 identifies the VM(s), necessary in implementing the service requested by the user, from the VM(s) comprised in the tenant corresponding to the user. In the example embodiment of Fig. 29, the node identifying means 101 of each of the controllers 100E1 and 100E2 identifies that the service as requested by the user is in need of the VM1 through VM4 among the VMs involved in the tenant corresponding to the user. Each node identifying means 101 correlates, for the service as requested by the user, the tenant corresponding to the user, with the VM identifier capable of uniquely identifying each of the VM1 through VM4 that are necessary for the service as requested by the user.

The position identifying means 102 of each of the controllers 100E1 and 100E2 identifies the information regarding the positions on the physical NWs of the VM1 through VM4 identified by the node identifying means 101. The position identifying means 102 in the controller 100E1 identifies the information regarding the positions of the VM1 and the VM2 in the physical NW1 supervised by the controller 100E1. Specifically, the position identifying means 102 in the controller 100E1 identifies, as the information regarding the positions of the VM1 and VM2 on the physical NW1, the addresses of the VM1 and VM2 as well as the addresses and port numbers of the virtual switches the VM1 and VM2 are connected to. On the other hand, the position identifying means 102 in the controller 100E2 identifies the information concerning the positions on the physical NW2 of the VM3 and the VM4 in the physical NW2 supervised by the controller 100E2. Specifically, the position identifying means 102 of the controller 100E2 identifies the addresses of the VM3 and the VM4 as well as the addresses and the port numbers of the virtual switches, the VM3 and the VM4 are connected to, as the information regarding the positions of the VM3 and the VM4 on the physical NW1.

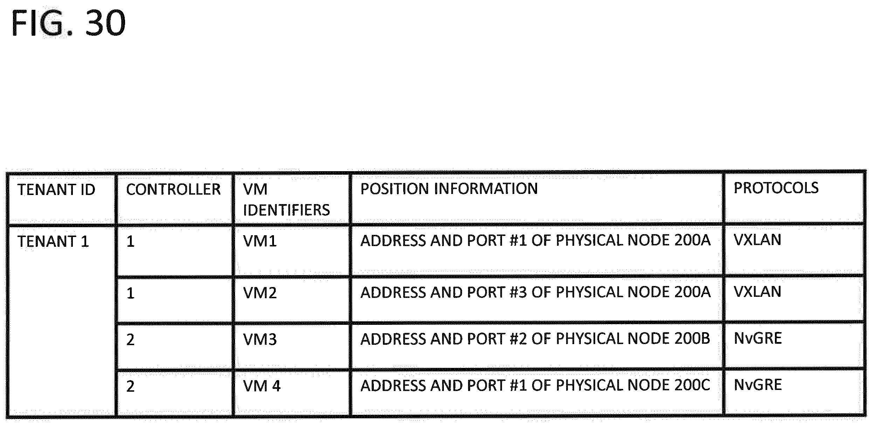

Fig. 30 depicts an example table held by the controllers 100E1 and 100E2 of the example embodiment 8. The table differs from that held by the controller of the example embodiment 7, shown in Fig. 28, in having protocol storage columns.

In the table shown in Fig. 30, a tenant corresponding to a user, a VM identifier(s) (VM1 through VM4) for VMs implementing the service as requested by the user, a controller(s) supervising the VM1 through VM4 (controller 1 or 2), the position information of the physical nodes implementing the VM1 through VM4 and a protocol(s) in the physical NW including the VM1 and the VM2, are stored correlated with one another in connection with the service(s) as requested by the user. For example, each of the VM1 and the VM2 is correlated with VXLAN which is a protocol in the physical NW1. On the other hand, each of the VM3 and the VM4 is correlated with NvGRE which is a protocol in the physical NW2. The control unit 110 of each of the controllers 100E1 and 100E2 exchanges, via the communication unit 120, the information on the tunneling protocol (VXLAN/ NvGRE) in the NW supervised.

The control unit 110 of each of the controllers 100E1 and 100E2 shares the position information of the VM(s) identified by the relevant controller (the identifier of the VM supervised by the relevant controller and the position information of the physical node). The controllers 100E1 and 100E2 exchange the position information of the VM(s) by e.g., the BGP.

The path setting means 103 of each of the controllers 100E1 and 100E2 sets a data path(s) on the physical NW required in implementing the service as requested by the user, based on the position information identified by the relevant controller and the position information of the VM(s) shared.

For example, the path setting means 103 of the controller 100E1 sets a data path between e.g., the VM1 and the VM2 in the physical NW1. The path setting means 103 of the controller 100E1 also sets, for the physical node 210A, the processing rules or the forwarding information necessary in forwarding to the VM1 or the VM2 the packet from the VM3 or the VM4 forwarded from GW1.

It should be noted that the tunneling protocol of the physical NW1 is VXLAN which may be different from the communication protocol usable in the Internet. In this case, the path setting means 103 of the controller 100E1 sets, for the GW1, a set of processing rules or the forwarding information to forward the packet, which was sent from the VM1 or the VM2 under VXLAN, to the Internet, after converting the VXLAN into the protocol usable in the Internet. Specifically, the path setting means 103 of the controller 100E1 instructs the GW1 to decapsulate the VXLAN-based forwarding information, such as addresses from the packet received from the physical node 210A, and encapsulate the resulting packet with the forwarding information, such as addresses, conforming to the communication protocol usable on the Internet, in the GW1.

On the other hand, the path setting means 103 of the controller 100E1 sets, for the GW1, a set of processing rules or the forwarding information to forward a packet forwarded based on the communication protocol usable in the Internet. To this end, the path setting means converts the packet into a packet conforming to VXLAN, a tunneling protocol of the physical node 210A, to forward the resulting packet to the physical node 210A. Specifically, the path setting means 103 of the controller 100E1 instructs the GW1 to decapsulate the forwarding information, such as address, which conforms to the communication protocol usable in the Internet, from the packet received, and to encapsulate the resulting packet with the forwarding information, such as addresses, conforming to the VXLAN.

Similarly, the path setting means 103 of the controller 100E2 sets a data path between the VM3 and VM4 in the physical NW2. Specifically, to set a data path between the physical node 200B where the VM3 has been booted and the physical node 200C where the VM4 has been booted, the path setting means 103 of the controller 100E2 sets, for the physical node 210B, a set of processing rules or the forwarding information that enables communication between the physical node 200B and the physical node 200C. The path setting means 103 of the controller 100E1 also sets, for the physical node 210A, a set of processing rules or the forwarding information to forward a packet from the VM1 or the VM2 to the GW1. The controller 1 also sets, for the physical node 210A, a set of processing rules or the forwarding information to forward a packet from the VM3 or the VM4 to the VM1 or the VM2.

The tunneling protocol of the physical NW2 is NvGRE which may be different from the communication protocol used in the Internet. In such case, the path setting means 103 of the controller 100E2 converts, for GW2, a packet, forwarded from VM3 and VM4 in conformity to NvGRE, into a packet conforming to the protocol for the Internet, so as to then forward the resulting packet to the Internet. Specifically, the path setting means 103 of the controller 100E2 instructs GW2 to decapsulate the NvGRE-conformant forwarding information (e.g., address) from the packet received from the physical node 210B and to encapsulate the resulting packet with the forwarding information (e.g., address) conforming to the communication protocol usable on the Internet.

On the other hand, the path setting means 103 of the controller 100E2 sets, for the GW2, a set of processing rules or the forwarding information to forward a packet to the physical node 210B. To this end, path setting means converts the packet, forwarded in conformity to the communication protocol usable in the Internet, into a packet conforming to NvGRE, a tunneling protocol of the physical NW2, to forward the resulting packet to the physical node 210B. Specifically, the path setting means 103 of the controller 100E2 instructs the GW2 to decapsulate the forwarding information, such as address, which conforms to the communication protocol usable in the Internet, from the packet received, and encapsulate the resulting packet with the forwarding information, such as addresses, conforming to the NvGRE.

Thus, with the controllers 100E1 and 100E2, it is possible to set the data path(s) between the VM1 through VM4 in the physical NW to implement the service as requested by the user.

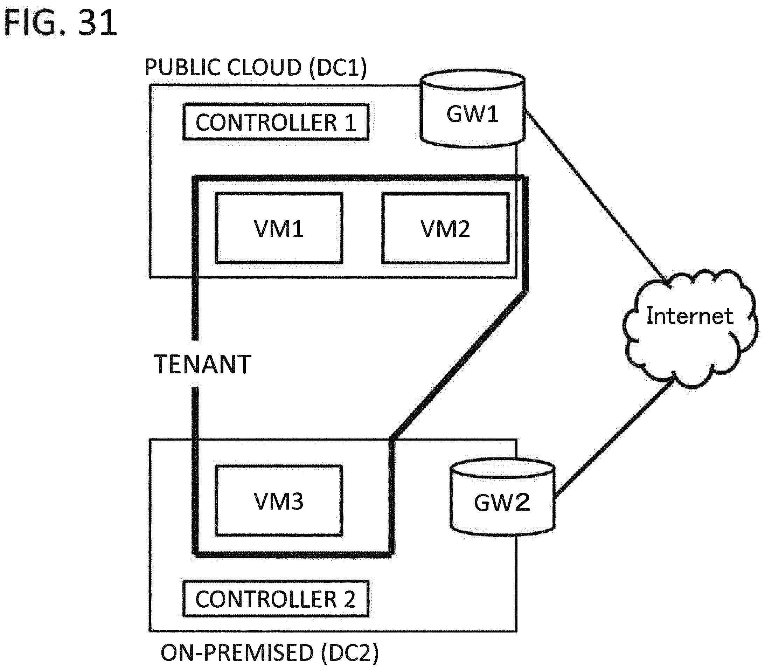

Fig. 31 depicts another example system configuration according to the example embodiment 8. Referring to Fig. 31, such a case may be contemplated in which the physical NW1 is a datacenter (DC1) providing a public cloud and the physical NW2 is on-premised (DC2). That is, the subject example configuration is the configuration of a so-called hybrid cloud in which a VM provided by the public cloud and another VM prepared on-premised are used to construct a sole tenant. In such configuration, the controller 1 managing the physical NW1 in the DC1 of the public cloud differs from the controller 2 managing the physical NW2 in the on-premised DC2. Thus, if a sole tenant is to be constructed and a data path on the physical NW necessary in implementing a preset service using the communication nodes involved in the tenant, is to be set, it is necessary to exchange the information between the controllers 1 and 2.

There are also cases wherein the physical NW 1 in the DC1 presenting the public cloud and the physical NW2 in the on-premised DC 2 have respective different protocols. For example, the tunneling protocol of the physical NW1 in the DC1 presenting the public cloud may be VXLAN and the tunneling protocol of the physical NW2 in the DC2 NvGRE.

The controllers 1, 2 of Fig. 31 identify the communication nodes necessary in implementing the service as requested by the user, while identifying the position information on the physical NW of the communication node specified and setting a data path between the communication nodes based on the position information specified.

In the example embodiment of Fig. 31, the node identifying means 101 of each of the controllers 1, 2 identifies the communication nodes, necessary in implementing the service as requested by the user, to be VM1 through VM3.

The node identifying means 101 of each of the controllers 1, 2 then identifies the position information on the physical NW of each of the VM1 through VM3. The controller 1 identifies the position information of the VM1, VM2 in the physical NW1 in the DC1 providing the public cloud the controller is supervising. The controller 2 identifies the position information of the VM3 in the physical NW2 in the on-premised DC2 it is supervising.

The path setting means 103 of each of the controllers 1, 2 then sets a data path(s) between the VM1 through VM3 based on the position information identified. There are cases wherein the communication protocol of the physical NW1 in the DC1 providing the public cloud differs from that of the physical NW2 in the on-premised DC2. In such case, the path setting means 103 of the controller 1 sets, for e.g., the GW1, a set of processing rules or the forwarding information that interchanges the communication protocol usable in the physical NW1 and that usable in the Internet. Also, the path setting means 103 of the controller 2 sets, for e.g., the GW2, a set of processing rules or the forwarding information that interchanges the communication protocol usable in the physical NW2 and that usable in the Internet. The detailed processing performed by the path setting means 103 of the controllers 1, 2 is similar to that of the path setting means 103 of the controllers 100E1 and 100E2, shown in Fig. 29, and hence is not here detailed. The controllers 1, 2 may thus set a data path(s) for VM1, VM2 and a data path(s) for VM3 existing in the DC different from that for VM1, VM2, thus allowing for implementing the service as requested by the user.

It is also possible for one of the controllers 1 and 2 to identify the position information of the VM1 through VM3 or set a data path between the VM1 through VM3 based on the information acquired from the other controller, such as the topology information of the physical NW managed by the other controller. For example, the controller 2 in the on-premised DC2 may identify the position information of the VM1 through VM3 or set a data path(s) between the VM1 through VM3 based on the topology information of the physical NW1 acquired from the controller 1 in the DC1 providing the public cloud. In this case, it is possible to set a data path(s) between the VM1 through VM3 by the controller 2 requesting the controller 1 to set a data path(s) between the V1 and the V2 in the physical NW1 in the DC1 and set the processing rules or the forwarding information for GW1.

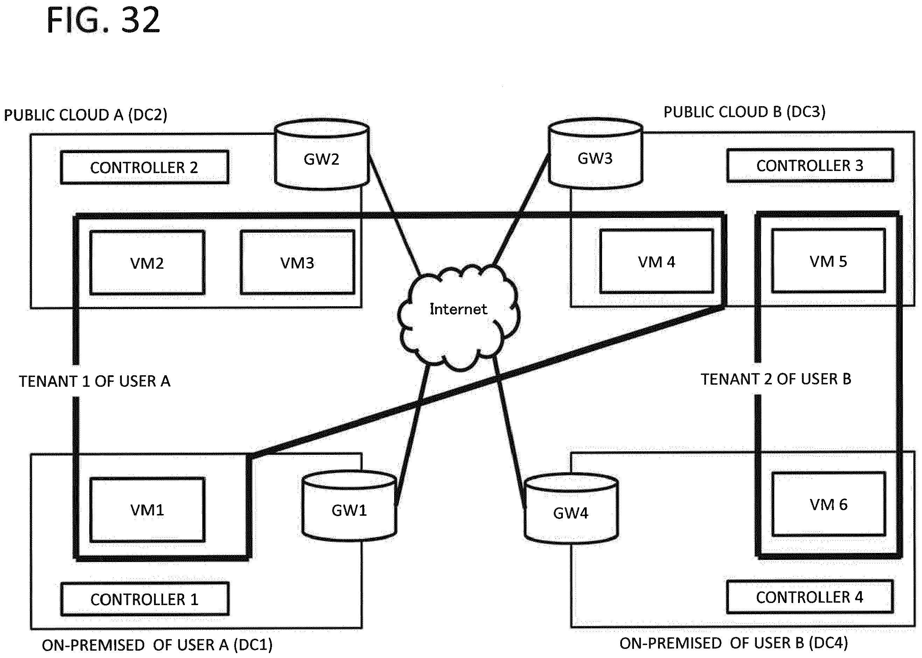

Fig. 32 depicts another system example configuration in an example embodiment 8. Referring to Fig. 32, the system of the example embodiment 8 includes an on-premised DC1 of a user A, a public cloud DC2, a public cloud DC3 and an on-premised DC4 of a user B.

Referring to Fig. 32, the system of the example embodiment 8 includes a tenant 1 corresponding to the user A and another tenant 2 corresponding to the user B, thus providing a multi-tenant system comprised of a plurality of DCs. The tenant 1, corresponding to the user A, includes the VM1 in the DC1, VM2, VM3 in the DC2 and the DM4 in the DC3. The tenant 2, corresponding to the user B, includes the VM5 in the DC3 and the VM6 in the DC4.

The node identifying means 101 of each of the controllers 2, 3 identifies the VM1 through VM4, involved in the tenant 1, corresponding to the user A, as the VMs implementing the service as requested by the user A. The position identifying means 102 of the controllers 1 through 3 identify the positions of the VM1 through VM4 on the physical NW. The position identifying means 102 of the controller 1 identifies the position information on the physical NW of the VM1 in the DC1 the controller is supervising. Similarly, the position identifying means 102 of the controllers 2, 3 also identify the position information on the physical NW of the VM2 and VM3 in the DC2 and the VM4 in the DC3. The path setting means 103 of the controllers 1 through 3 sets a data path(s) between the VM1 through VM4. There are cases wherein each of the DC1 to DC3 uses a communication protocol different from that usable in the Internet. In such case, each path setting means 103 of the controllers 1 through 3 sets, in each of GW1 through GW3, a set of processing rules or the forwarding information usable for modifying the communication protocol of the Internet and communication protocols of the DC1 through DC3 in relation to one another. The operation of the path setting means 103 of the controllers 1 through 3 is similar to that of the path setting means 103 of the controllers 100E1 and 100E2 shown in Fig. 29 and hence is not recited here for simplicity. It is thus possible for the path setting means 103 of the controllers 1 through 3 to set a data path(s) between any two of the VM1 through VM4 existing in the distinct DCs, thus allowing for implementation of the service as requested by the user.

It is possible for any of the controllers 1 through 3 to identify the position information of the VM1 through VM4 or set a data path(s) between any of the VM1 through VM4, based on the information acquired from the remaining controller(s), such as the topology information of the physical NW supervised by the other controller(s). For example, the controller 1 in the on-premised DC1 may identify the position information of the VM1 through VM4 or set the data path(s) between any of the VM1 through VM4, based on e.g., the topology information of the physical NW in the DC2 or DC3 acquired by the controller 1 in the on-remised DC1 from the other controllers 2, 3. In this case, the controller 1 may request the controllers 2 and 3 to set a data path(s) on the physical NW in the DC2 or DC3 or set the GW2 of the DC2 or the GW3 of the DC3 to set a data path(s) between the VM1 through VM4.

In similar manner, the node identifying means 101 of each of the controllers 3 and 4 identifies the VM5, VM6 involved in the tenant 2 corresponding to the user A, as being the VMs implementing the service as requested by the user B. The position identifying means 102 of the controller 3 or 4 then identifies the position information on the physical NW of the VM5 and the VM6. In similar manner, the position identifying means 102 of the controller 4 identifies the position information on the physical NW of the VM5 in the DC3 the controller is supervising. The path setting means 103 of each of the controllers 3, 4 then sets a data path(s) between the DM5 and the DM6. There are cases where the communication protocol of the DC3, DC4 differs from that usable on the Internet. In such case, the path setting means 103 of each of the controllers 3, 4 sets, in each of theGW3 and GW4, a set of processing rules and the forwarding information configured for correlatively modifying the communication protocol of each of the DC3 and DC4 and the communication protocol usable on the Internet. Since a detailed processing performed in the path setting means 103 of each of the controllers 3, 4 is similar to that of the path setting means 103 of the controllers 100E1 and 100E2, shown in Fig. 29, it is not here stated for simplicity. The data path between the VM5 and the VM6 in the distinct DCs can be set by the path setting means 103 of the controllers 3 and 4, thus implementing the service as requested by the user.

As in the case of the user A, one of the controllers 3, 4 may identify the position information of the VM1 through VM3, or set a path(s) between any two of the VM1 through VM, based on the information acquired from other controllers, such as the topology information of the physical NW supervised by the other controllers.

As described above, the present invention may be applied even for such a case where there exist physically different networks and, in addition, the communication protocols used are also different.

Although the preferred example embodiments of the present invention are here shown, the present invention is not to be restricted to this particular mode, such that any further changes, substitutions or adjustments may be made within the range not departing from the basic technical concept of the invention. For example, the configurations of networks or elements, or the modes of expression of messages, shown in the drawings, are given merely as illustrative to assist in the understanding of the present invention, which is not to be restricted to the configurations shown.

It should be noted that respective request means of the controllers of the above described example embodiments may be implemented by a computer program, constituting the controllers and allowing execution of each processing with the aid of the computer hardware.

Preferred modes for carrying out the invention are recited as follows:
(Mode 1) See the controller according to the first aspect.
(Mode 2) The controller according to mode 1, wherein,
   the third means sets a data path between the communication nodes on the physical network based on the information regarding the position.
(Mode 3) The controller according to mode 1 or 2, wherein,
   the first means identifies the communication node(s) necessary for the service(s) as requested by the user(s) from a communication node(s) included in a tenant corresponding to the user(s).
(Mode 4) The controller according to any one of modes 1 to 3, wherein,
   the first means identifies the communication node(s) necessary for the service(s) requested by a plurality of users from communication nodes included in a plurality of tenants respectively corresponding to the plurality of users, and
   the third means sets a plurality of data paths implementing the services on the physical network respectively for the plurality of tenants.
(Mode 5) The controller according to mode 4, wherein
   the first means supervises, from one tenant to another, a plurality of communication nodes included in physical networks that are different from one tenant to another.
(Mode 6) The controller according to any one of modes 1 to 5, wherein,
   in case of a change of the communication node(s) supervised by the first means, the third means sets a data path that implements the change on the physical network.
(Mode 7) The controller according to any one of modes 1 to 6, further comprising: fourth means capable of adding a virtual machine(s) providing a function(s) corresponding to the service(s) as requested by the user(s), wherein
   the first means identifies the virtual machine(s) added by the fourth means as the communication node(s) corresponding to the service(s) as requested by the user(s).
(Mode 8) See the communication system according to the second aspect.
(Mode 9) See the control method according to the third aspect.
(Mode 10) See the control method according to the fourth aspect. Note that developed modes for Modes 8 to 10, similar to Modes 2 to 7 for Mode 1, can also be added.

The disclosures of the above mentioned non-Patent Literatures are to be incorporated herein by reference. The example embodiments or Examples may be modified or adjusted within the concept of the total disclosures of the present invention, inclusive of claims, based on the fundamental technical concept of the invention. A series of combinations or selections of elements herein disclosed (elements of claims, Examples and drawings) may be made within the context of the claims of the present invention. That is, the present invention may include a wide variety of changes or corrections that may occur to those skilled in the art in accordance with the total disclosures inclusive of the claims and the drawings as well as the technical concept of the invention. In particular, it should be understood that any optional numerical figures or sub-ranges involved in the ranges of numerical values set out herein ought to be construed to be specifically stated even in the absence of explicit statements.

### [REFERENCE SIGNS LIST]

- 100, 100A: through 100F, 100E1, 100E2 controllers
- 101, 101D: node request means
- 102, 102D: position identifying means
- 103, 103D: path setting means
- 104, 104D: node request means
- 110, 110D: control unit
- 120: communication unit
- 200, 200a: through 200d, 200A through 200D, 210, 210A, 210B physical nodes (physical switches)
- 220: virtual network function (VNF)
- 300: VM
- 2101: path control unit

## Claims

1. A controller, comprising:
first means for identifying a communication node(s) corresponding to a service(s) requested by a user(s);
second means for identifying information regarding a position of the identified communication node(s) in a physical network; and
third means for setting a data path implementing the service(s) on the physical network based on the information regarding the position.

2. The controller according to claim 1, wherein
the third means sets a data path between the communication nodes on the physical network based on the information regarding the position.

3. The controller according to claim 1 or 2, wherein
the first means identifies the communication node(s) necessary for the service(s) as requested by the user(s) from a communication node(s) included in a tenant corresponding to the user(s).

4. The controller according to any one of claims 1 to 3, wherein
the first means identifies the communication node(s) necessary for the services requested by a plurality of users from communication nodes included in a plurality of tenants respectively corresponding to the plurality of users, and
the third means sets a plurality of data paths implementing the services on the physical network respectively for the plurality of tenants.

5. The controller according to claim 4, wherein
the first means supervises, from one tenant to another, a plurality of communication nodes included in physical networks that are different from one tenant to another.

6. The controller according to any one of claims 1 to 5, wherein
in case of a change of the communication node(s) supervised by the first means, the third means sets a data path that implements the change on the physical network.

7. The controller according to any one of claims 1 to 6, further comprising:
fourth means capable of adding a virtual machine(s) providing a function(s) corresponding to the service(s) as requested by the user(s), wherein
the first means identifies the virtual machine(s) added by the fourth means as the communication node(s) corresponding to the service(s) as requested by the user(s).

8. A control method, comprising:
identifying a communication node(s) corresponding to a service(s) requested by a user(s);
identifying information regarding a position of the identified communication node(s) in a physical network; and
setting a data path implementing the service(s) on the physical network based on the information regarding the position.

9. The control method according to claim 8, comprising:
setting a data path between the communication nodes on the physical network based on the information regarding the position.

10. The control method according to claim 8 or 9, comprising:
identifying the communication node(s) necessary for the service(s) as requested by the user(s) from a communication node(s) included in a tenant corresponding to the user(s).

11. The control method according to any one of claims 8 to 10, comprising
identifying the communication node(s) necessary for the services requested by a plurality of users from communication nodes included in a plurality of tenants respectively corresponding to the plurality of users; and
setting a plurality of data paths implementing the services on the physical network respectively for the plurality of tenants.

12. The control method according to claim 11, comprising:
supervising, from one tenant to another, a plurality of communication nodes included in physical networks that are different from one tenant to another.

13. The control method according to any one of claims 8 to 12, comprising:
in case of a change of the communication node(s) corresponding to the service(s) requested by the user(s), setting a data path that implements the change on the physical network.

14. The control method according to any one of claims 8 to 13, wherein
a virtual machine(s) providing a function(s) corresponding to the service(s) as requested by the user(s) can be added, and
the control method comprises identifying the added virtual machine(s) as the communication node(s) corresponding to the service(s) as requested by the user(s).

15. A communication system, comprising:
a controller controlling a physical network; and
a plurality of communication nodes supervised by the controller, wherein
the controller comprises:
first means for identifying a communication node(s), among the plurality of communication nodes, corresponding to a service(s) requested by a user(s);
second means for identifying information regarding a position of the identified communication node(s) in a physical network; and
third means for setting a data path implementing the service(s) on the physical network based on the information regarding the position.

16. The communication system according to claim 15, wherein
the third means sets a data path between the communication nodes on the physical network based on the information regarding the position.

17. The communication system according to claim 15 or 16, wherein
the first means identifies the communication node(s) necessary for the service(s) as requested by the user(s) from a communication node(s) included in a tenant corresponding to the user(s).

18. The communication system according to any one of claims 15 to 17, wherein,
the first means identifies the communication node(s) necessary for the services requested by a plurality of users from communication nodes included in a plurality of tenants respectively corresponding to the plurality of users, and
the third means sets a plurality of data paths implementing the services on the physical network respectively for the plurality of tenants.

19. The communication system according to claim 18, wherein
the first means supervises, from one tenant to another, a plurality of communication nodes included in physical networks that are different from one tenant to another.

20. The communication system according to any one of claims 15 to 19, wherein
in case of a change of the communication node(s) supervised by the first means, the third means sets a data path that implements the change on the physical network.

21. The communication system according to any one of claims 15 to 20, further comprising:
fourth means capable of adding a virtual machine(s) providing a function(s) corresponding to the service(s) as requested by the user(s), wherein
the first means identifies the virtual machine(s) added by the fourth means as the communication node(s) corresponding to the service(s) as requested by the user(s).

22. A program that causes a computer to execute:
identifying a communication node(s) corresponding to a service(s) requested by a user(s);
identifying information regarding a position of the identified communication node(s) in a physical network; and
setting a data path implementing the service(s) on the physical network based on the information regarding the position.
